(19) Europäisches Patentamt
European Patent Office
Office européen des brevets

(11) **EP 3 557 897 B1**

(12) **EUROPÄISCHE PATENTSCHRIFT**

(45) Veröffentlichungstag und Bekanntmachung des Hinweises auf die Patenterteilung:
**06.04.2022 Patentblatt 2022/14**

(21) Anmeldenummer: **18168495.2**

(22) Anmeldetag: **20.04.2018**

(51) Internationale Patentklassifikation (IPC):
*H04W 12/04* (2021.01)   *H04L 9/08* (2006.01)
*H04L 9/12* (2006.01)   *H04L 29/06* (2006.01)

(52) Gemeinsame Patentklassifikation (CPC):
**H04W 12/04; H04L 9/083; H04L 63/0853;**
H04L 2209/805

(54) **VERFAHREN UND VORRICHTUNG ZUM BEREITSTELLEN ZUMINDEST EINES KRYPTOGRAFISCHEN SCHLÜSSELS FÜR ZUMINDEST EIN MOBILGERÄT**

METHOD AND DEVICE FOR PROVIDING AT LEAST ONE CRYPTOGRAPHIC KEY FOR AT LEAST ONE MOBILE DEVICE

PROCÉDÉ ET APPAREIL DE FOURNITURE D'AU MOINS UNE CLÉ CRYPTOGRAPHIQUE POUR AU MOINS UN APPAREIL MOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.10.2019 Patentblatt 2019/43**

(73) Patentinhaber: **Fraunhofer-Gesellschaft zur Förderung der angewandten Forschung e.V.
80686 München (DE)**

(72) Erfinder:
• **Martin, Striegel
85354 Freising (DE)**
• **Bodo, Selmke
85737 Ismaning (DE)**
• **Katja, Miller
82152 Krailling (DE)**

(74) Vertreter: **2SPL Patentanwälte PartG mbB
Landaubogen 3
81373 München (DE)**

(56) Entgegenhaltungen:
**WO-A1-2009/113057     WO-A2-2010/013121
US-A1- 2008 298 587**

## Beschreibung

### Technisches Gebiet

Ausführungsbeispiele befassen sich mit einem Verfahren und einer Vorrichtung zum Bereitstellen zumindest einen kryptografischen Schlüssels für zumindest ein Mobilgerät, genauer, aber nicht ausschließlich, mit einem Abschirmen eines kabellosen Kommunikationskanals während des Bereitstellens des kryptografischen Schlüssels.

### Hintergrund

Befeuert durch Schlagworte wie Internet of Things (IoT, Internet der Dinge) und Industrie 4.0 wird die Vernetzung technischer Geräte immer populärer. Eine Ausprägung hiervon sind Netzwerke aus drahtlos miteinander verbundenen Sensorknoten.

Sensorknoten enthalten einen oder mehrere Sensoren, einen Mikrocontroller, ein Funkmodul und eine Batterie zur Spannungsversorgung. Sie sammeln Daten und liefern diese an eine Sammelstelle, beispielsweise das Backend (eine Zentralstelle oder Daten-Sammelstelle) des Netzwerkes. Sensometze können aus einer sehr großen Anzahl Sensorknoten bestehen. Sie können flexibel aufgebaut werden, sowohl innerhalb von Gebäuden als auch fernab menschlicher Infrastruktur. Kleine Abmessungen sind notwendig, um einen einfachen Transport zu gewährleisten. Um vom Stromnetz unabhängig zu sein kann die Spannungsversorgung über einen langen Zeitraum mittels Batterie erfolgen.

Aus US-Patentanmeldung US 2008/0298587 A1 ist eine Vorrichtung und ein Verfahren zum benutzerfreundlichen Verteilen von Informationen bekannt. Hier werden Informationen, wie etwa Schlüsselinformationen dadurch übertragen, dass ein Schlüsselgerät und das Mobilgerät in einer abgeschirmten Struktur, wie etwa einem Faradayschen Käfig, angeordnet werden und der Schlüsselaustausch innerhalb dieser abgeschirmten Struktur geschieht. Zusätzlich wird ein Jammer außerhalb der abgeschirmten Struktur genutzt, um das Abhören des Schlüssels weiter zu erschweren. Ein Beacon außerhalb der abgeschirmten Struktur sendet ein periodisches Signal, das von dem Schlüsselgerät empfangen werden kann, falls die Abschirmung nicht ausreichend ist. Ist dies der Fall, so wird die Übertragung des Schlüssels nicht durchgeführt.

Auch in WO 2010/013121 A1 wird ein Schlüsselaustausch beispielsweise in einem "electromagnetic shielding enclosure" (ESE, einer elektromagnetisch abgeschirmten Hülle) durchgeführt. In WO 2009/113057 A1 wird ebenfalls ein Faradayscher Käfig genutzt, dieser wird jedoch genutzt, um externe Signale während eines Bezahlprozesses zu dämpfen, um den Bezahlprozess abzusichern.

## Zusammenfassung

Ausführungsbeispiele schaffen ein Verfahren sowie eine Vorrichtung zum Bereitstellen zumindest eines kryptografischen Schlüssels für mindestens ein Mobilgerät. Das Verfahren basiert darauf, dass ein kabelloser Kommunikationskanal, der für die Übertragung des kryptografischen Schlüssels genutzt werden soll, durch ein Abschirmmittel, etwa ein abschirmendes Behältnis, in das das Mobilgerät gelegt wird, abgeschirmt wird, so dass es für außenstehende nicht mehr rekonstruierbar ist. Dadurch kann der kryptografische Schlüssel sicher zum Mobilgerät übertragen werden, ohne dass zusätzliche Sicherheitsmaßnahmen, wie etwa eine Infrastruktur für ein asymmetrisches kryptografisches Verfahren, notwendig sind. Dabei kann der kabellose Kommunikationskanal zu mehreren Mobilgeräten gleichzeitig abgeschirmt werden, um eine schnelle Verteilung der Schlüssel zu ermöglichen.

Ausführungsbeispiele schaffen ein Verfahren zum Bereitstellen zumindest eines kryptografischen Schlüssels für zumindest ein Mobilgerät. Das Verfahren umfasst Abschirmen eines kabellosen Kommunikationskanals zwischen einem Kommunikationsmodul und dem zumindest einem Mobilgerät durch ein Abschirmmittel um den kabellosen Kommunikationskanal zu schützen. Das Verfahren umfasst ferner Bereitstellen des zumindest einen kryptografischen Schlüssels für das zumindest eine Mobilgerät über den abgeschirmten kabellosen Kommunikationskanal. Durch die Abschirmung des Kanals kann ein sicherer Kanal mit geringer Reichweite geschaffen werden, der gegen ein Abhören oder Stören des kabellosen Kommunikationskanals geschützt sein kann.

In zumindest einigen Ausführungsbeispielen ist das Abschirmmittel ein abschirmendes Behältnis, etwa eine abgeschirmte Box. Das Mobilgerät kann in das abschirmende Behältnis gelegt werden. Sind das Kommunikationsmodul und das Mobilgerät im Innern des abschirmenden Behältnisses angeordnet, so kann der kabellose Kommunikationskanal zwischen dem Kommunikationsmodul und dem Mobilgerät durch das abschirmende Behältnis gegenüber einem weiteren kabellosen Empfänger abgeschirmt werden.

Das Abschirmen kann den kabellosen Kommunikationskanal gegenüber einem weiteren kabellosen Empfänger, der von dem Kommunikationsmodul und dem zumindest einen Mobilgerät verschieden ist, abschirmen. Das Abschirmen kann dazu ausgelegt sein, um ein Abhören des kabellosen Kommunikationskanals durch einen weiteren kabellosen Empfänger, der von dem Kommunikationsmodul und dem zumindest einen Mobilgerät verschieden ist, zu erschweren. In zumindest manchen Ausführungsbeispielen kann das Abschirmmittel eine kabellose Kommunikation zwischen der Kommunikationsmodul und dem zumindest einem Mobilgerät über den abgeschirmten kabellosen Kommunikationskanal so abschirmen, dass Daten, welche über den abgeschirmten Kommunikationskanal übertragen werden, durch einen weiteren, von dem Kommunikationsmodul und dem zumindest einen Mobilgerät verschiedenen kabellosen Empfänger nicht vollständig rekonstruiert werden können. Kann der weitere Empfänger den kabellosen Kommunikationskanal nicht abhören oder nur unvollständig rekonstruieren, dann ist ein sicheres Bereitstellen des zumindest einen kryptografischen Schlüssels möglich.

In manchen Ausführungsbeispielen umfasst das Verfahren ferner ein Bestimmen, ob der kabellose Kommunikationskanal durch das Abschirmmittel abgeschirmt ist. Dies kann etwa ein Überprüfen eines elektromechanischen Schlosses oder ein Messen einer Signalstärke des kabellosen Kommunikationskanals außerhalb des Abschirmmittels umfassen. Ist das Abschirmmittel ein abschirmendes Behältnis, so kann das Bestimmen, ob der kabellose Kommunikationskanal durch das Abschirmmittel ausreichend abgeschirmt ist, kann darauf basieren, ob das abschirmende Behältnis geschlossen ist. Alternativ oder zusätzlich kann das Bestimmen, ob der kabellose Kommunikationskanal durch das Abschirmmittel ausreichend abgeschirmt ist, ein Messen einer Signalstärke einer kabellosen Kommunikation über den kabellosen Kommunikationskanal nach dem Abschirmen durch das Abschirmmittel umfassen. Das Bereitstellen des zumindest einen kryptografischen Schlüssels kann etwa durchgeführt werden, falls das Bestimmen, ob der kabellose Kommunikationskanal durch das Abschirmmittel abgeschirmt ist, feststellt, dass der kabellose Kommunikationskanal durch das Abschirmmittel ausreichend abgeschirmt ist. So kann etwa erreicht werden, dass bei einer Manipulation, einem Defekt oder einer Fehlbedienung des Abschirmmittels ein Abhören des kabellosen Kommunikationskanals verhindert oder erschwert wird. Durch einen Sensor, der außerhalb der Abschirmung angeordnet sein kann, kann überprüft werden, ob der kabellose Kommunikationskanal durch das Abschirmmittel ausreichend abgeschirmt ist.

In zumindest einigen Ausführungsbeispielen kann das Bereitstellen des zumindest einen kryptografischen Schlüssels unterbrochen werden, falls das Bestimmen, ob der kabellose Kommunikationskanal durch das Abschirmmittel ausreichend abgeschirmt ist, feststellt, dass der kabellose Kommunikationskanal nicht mehr ausreichend durch das Abschirmmittel abgeschirmt ist. So kann etwa bei einer Manipulation der Abschirmung während der Bereitstellung des zumindest einen kryptografischen Schlüssels ein Abhören verhindert oder erschwert werden.

Der kryptografische Schlüssel kann beispielsweise ein kryptografischer Schlüssel zur Authentifizierung des zumindest einen Mobilgeräts gegenüber einem Kommunikationspartner sein. In manchen Ausführungsbeispielen wird der kryptografische Schlüssel nach der Bereitstellung des zumindest einen kryptografischen Schlüssels von dem zumindest einen Mobilgerätgenutzt wird, um das zumindest eine Mobilgerät über den kabellosen Kommunikationskanal gegenüber einem Kommunikationspartner zu Authentifizieren. Der kryptografische Schlüssel kann zum kryptografischen Absichern einer kabellosen Kommunikation des zumindest einen Mobilgeräts vorgesehen sein. So kann der kryptografische Schlüssel beispielsweise die Identität des zumindest einen Mobilgerät belegen, oder dessen Zugehörigkeit zu einem Verbund von Mobilgeräten, beispielsweise zu einem Sensornetzwerk. Der kryptografische Schlüssel kann zum Autorisieren des zumindest einen Mobilgeräts gegenüber einem Kommunikationspartner vorgesehen sein. Alternativ oder zusätzlich kann der kryptografische Schlüssel zum Herstellen einer Transportverschlüsselung über den kabellosen Kommunikationskanal, etwa durch das zumindest eine Mobilgerät oder durch den Kommunikationspartner, vorgesehen sein.

In zumindest einigen Ausführungsbeispielen basiert der kabellose Kommunikationskanal auf einem kabellosen Kommunikationsstandard. Der kabellose Kommunikationsstandard kann etwa der einzige kabellose Kommunikationsstandard sein, der von dem zumindest einen Mobilgerät unterstützt wird. Beispielsweise kann der kabellose Kommunikationsstandard nach der Bereitstellung des zumindest einen kryptografischen Schlüssels von dem zumindest einen Mobilgerät genutzt werden, um Nutzdaten des Mobilgeräts zu einem Kommunikationspartner zu übertragen. So kann das zumindest eine Mobilgerät etwa mit einem einzigen Kommunikationsmodul genutzt werden, und keine zusätzliche Hardware und/oder Kommunikationsprotokoll ist notwendig zum Bereitstellen des zumindest einen kryptografischen Schlüssels.

In manchen Ausführungsbeispielen umfasst das Verfahren ferner Erhalten einer Mehrzahl von kryptografischen Schlüsseln über einen gesicherten Kanal. Das Bereitstellen des zumindest einen kryptografischen Schlüssels kann auf der Mehrzahl von kryptografischen Schlüsseln basieren. Die Schlüssel der Mehrzahl von kryptografischen Schlüssel können an das zumindest eine Mobilgerät verteilt werden durch das Bereitstellen des zumindest einen kryptografischen Schlüssels.

In manchen Ausführungsbeispielen umfasst das Verfahren ferner ein Erkennen einer möglichen Manipulation des Abschirmmittels und Löschen der Mehrzahl von kryptografischen Schlüsseln, falls eine mögliche Manipulation des Abschirmmittels erkannt wird. So kann verhindert werden, dass die Schlüssel von nicht autorisierten Mobilgeräten oder Zentralstellen missbraucht werden.

Ausführungsbeispiele schaffen ferner eine Vorrichtung zum Bereitstellen zumindest eines kryptografischen Schlüssels für zumindest ein Mobilgerät. Die Vorrichtung umfasst ein Kommunikationsmodul ausgebildet zum Kommunizieren mit dem zumindest einen Mobilgerät über einen kabellosen Kommunikationskanal. Die Vorrichtung umfasst ferner ein Abschirmmittel ausgebildet zum Abschirmen des kabellosen Kommunikationskanals zwischen dem Kommunikationsmodul und dem zumindest einen Mobilgerät um den kabellosen Kommunikationskanal zu schützen. Das Verfahren umfasst ferner ein Kontrollmodul ausgebildet zum Bereitstellen des zumindest einen kryptografischen Schlüssels über das Kommunikationsmodul und den abgeschirmten kabellosen Kommunikationskanal für das zumindest eine Mobilgerät.

In zumindest manchen Ausführungsbeispielen ist das Abschirmmittel ein abschirmendes Behältnis. Das abschirmende Behältnis kann zur Aufnahme des zumindest einen Mobilgeräts während des Bereitstellens des zumindest einen kryptografischen Schlüssels ausgelegt sein. Das Kommunikationsmodul kann innerhalb des abschirmenden Behältnisses angeordnet sein. So kann das abschirmende Behältnis als Abschirmmittel verwendet werden. Elektromagnetische Signale innerhalb des abschirmenden Behältnisses können so weit gedämpft werden, dass eine Rekonstruktion der Signale außerhalb des abschirmenden Behältnisses erschwert oder verhindert wird.

In manchen Ausführungsbeispielen umfasst die Vorrichtung ferner ein Sensormodul ausgebildet zum Bestimmen, ob der kabellose Kommunikationskanal ausreichend durch das Abschirmmittel abgeschirmt ist. Das Kontrollmodul kann ausgebildet sein, um den zumindest einen kryptografischen Schlüssels bereitzustellen, falls das Sensormodul bestimmt, dass der kabellose Kommunikationskanal ausreichend durch das Abschirmmittel abgeschirmt ist. Wird erkannt, dass die Abschirmung nicht ausreichend ist, etwa weil erkannt wird, dass das abschirmende Behältnis nicht verschlossen wird, oder weil durch Messung einer Signalqualität außerhalb der Abschirmung festgestellt wird, dass die Abschirmung nicht ausreicht, so kann das Bereitstellen des zumindest einen kryptografischen Schlüssels verhindert oder unterbrochen werden.

### Figurenkurzbeschreibung

Einige Beispiele von Vorrichtungen und/oder Verfahren werden nachfolgend bezugnehmend auf die beiliegenden Figuren lediglich beispielhaft näher erläutert. Es zeigen:

Fign. 1a und 1b     zeigen Ausführungsbeispiele eines Verfahrens zum Bereitstellen zumindest eines kryptografischen Schlüssels für zumindest ein Mobilgerät;

Fign. 2a und 2b     zeigen Ausführungsbeispiele einer Vorrichtung zum Bereitstellen zumindest eines kryptografischen Schlüssels für zumindest ein Mobilgerät;

Fig. 3     zeigt eine schematische Darstellung eines Sensornetzwerks;

Fig. 4     illustriert den Austausch von Schlüsseln zwischen einer Box und Sensorknoten;

Fig. 5     illustriert den Austausch von Schlüsseln zwischen einer Box und Sensorknoten, wobei ein Angreifer außerhalb der Box angeordnet ist;

Fig. 6     illustriert eine Erweiterung der Box durch ein Kabel, worüber eine Mehrzahl von Schlüsseln übertragen wird; und

Fig. 7     illustriert ein beispielhaftes Verfahren zum Einsatz der Box zum Übertragen von kryptografischen Schlüsseln auf Sensorknoten.

### Beschreibung

Verschiedene Beispiele werden nun ausführlicher Bezug nehmend auf die beiliegenden Figuren beschrieben, in denen einige Beispiele dargestellt sind. In den Figuren können die Stärken von Linien, Schichten und/oder Bereichen zur Verdeutlichung übertrieben sein.

Während sich weitere Beispiele für verschiedene Modifikationen und alternative Formen eignen, sind dementsprechend einige bestimmte Beispiele derselben in den Figuren gezeigt und werden nachfolgend ausführlich beschrieben. Allerdings beschränkt diese detaillierte Beschreibung weitere Beispiele nicht auf die beschriebenen bestimmten Formen. Weitere Beispiele können alle Modifikationen, Entsprechungen und Alternativen abdecken, die in den Rahmen der Offenbarung fallen. Gleiche oder ähnliche Bezugszeichen beziehen sich in der gesamten Beschreibung der Figuren auf gleiche oder ähnliche Elemente, die bei einem Vergleich miteinander identisch oder in modifizierter Form implementiert sein können, während sie die gleiche oder eine ähnliche Funktion bereitstellen.

Es versteht sich, dass, wenn ein Element als mit einem anderen Element "verbunden" oder "gekoppelt" bezeichnet wird, die Elemente direkt, oder über ein oder mehrere Zwischenelemente, verbunden oder gekoppelt sein können. Wenn zwei Elemente A und B unter Verwendung eines "oder" kombiniert werden, ist dies so zu verstehen, dass alle möglichen Kombinationen offenbart sind, d. h. nur A, nur B sowie A und B, sofern nicht explizit oder implizit anders definiert. Eine alternative Formulierung für die gleichen Kombinationen ist "zumindest eines von A und B" oder "A und/oder B". Das Gleiche gilt, mutatis mutandis, für Kombinationen von mehr als zwei Elementen.

Die Terminologie, die hier zum Beschreiben bestimmter Beispiele verwendet wird, soll nicht begrenzend für weitere Beispiele sein. Wenn eine Singularform, z. B. "ein, eine" und "der, die, das" verwendet wird und die Verwendung nur eines einzelnen Elements weder explizit noch implizit als verpflichtend definiert ist, können weitere Beispiele auch Pluralelemente verwenden, um die gleiche Funktion zu implementieren. Wenn eine Funktion nachfolgend als unter Verwendung mehrerer Elemente implementiert beschrieben ist, können weitere Beispiele die gleiche Funktion unter Verwendung eines einzelnen Elements oder einer einzelnen Verarbeitungsentität implementieren. Es versteht sich weiterhin, dass die Begriffe "umfasst", "umfassend", "aufweist" und/oder "aufweisend" bei Gebrauch das Vorhandensein der angegebenen Merkmale, Ganzzahlen, Schritte, Operationen, Prozesse, Elemente, Komponenten und/oder einer Gruppe derselben präzisieren, aber nicht das Vorhandensein oder das Hinzufügen eines oder mehrerer anderer Merkmale, Ganzzahlen, Schritte, Operationen, Prozesse, Elemente, Komponenten und/einer Gruppe derselben ausschließen.

Sofern nicht anderweitig definiert, werden alle Begriffe (einschließlich technischer und wissenschaftlicher Begriffe) hier in ihrer üblichen Bedeutung auf dem Gebiet verwendet, zu dem Beispiele gehören.

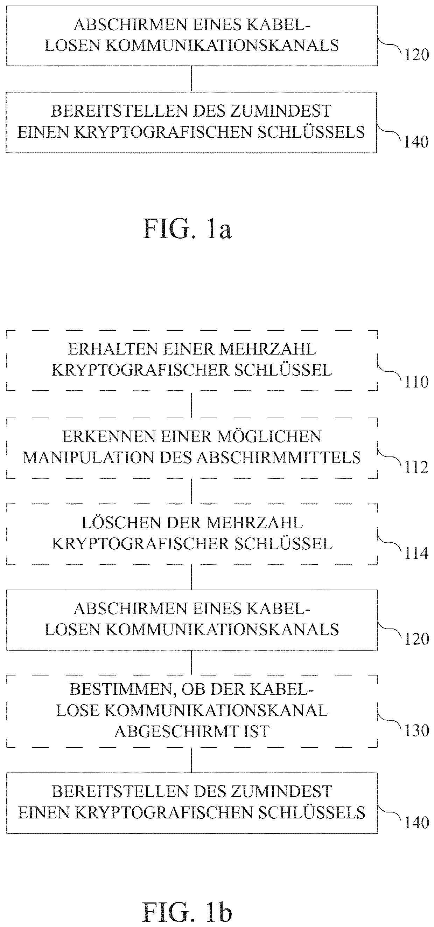

Die Fign. 1a und 1b zeigen Ausführungsbeispiele eines Verfahrens zum Bereitstellen zumindest einen kryptografischen Schlüssels für zumindest ein Mobilgerät 20. Das Verfahren umfasst Abschirmen 120 eines kabellosen Kommunikationskanals zwischen einem Kommunikationsmodul 12 und dem zumindest einem Mobilgerät 20 durch ein Abschirmmittel 14 um den kabellosen Kommunikationskanal zu schützen. Das Verfahren umfasst ferner Bereitstellen 140 des zumindest einen kryptografischen Schlüssels für das zumindest eine Mobilgerät 20 über den abgeschirmten kabellosen Kommunikationskanal.

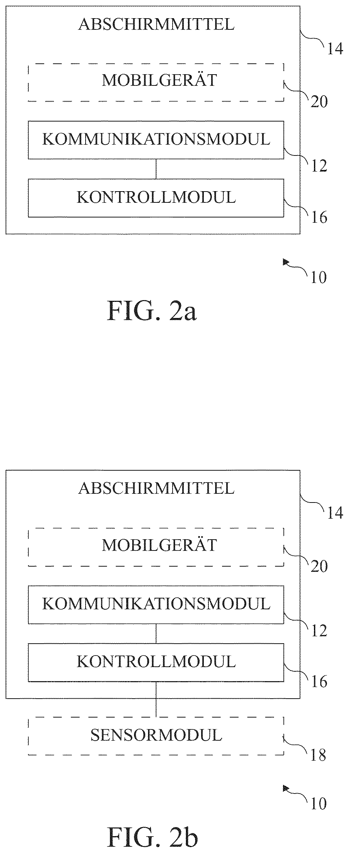

Die Fign. 2a und 2b zeigen Ausführungsbeispiele einer entsprechenden Vorrichtung 10 zum Bereitstellen des zumindest eines kryptografischen Schlüssels für das zumindest eine Mobilgerät 20, Die Vorrichtung 10 umfasst das Kommunikationsmodul 12 ausgebildet zum Kommunizieren mit dem zumindest einen Mobilgerät 20 über den kabellosen Kommunikationskanal. Die Vorrichtung 10 umfasst ferner das Abschirmmittel 14 ausgebildet zum Abschirmen des kabellosen Kommunikationskanals zwischen dem Kommunikationsmodul 12 und dem zumindest einen Mobilgerät 20 um den kabellosen Kommunikationskanal zu schützen. Die Vorrichtung 10 umfasst ferner ein Kontrollmodul 16 ausgebildet zum Bereitstellen des zumindest einen kryptografischen Schlüssels über das Kommunikationsmodul 12 und den abgeschirmten kabellosen Kommunikationskanal für das zumindest eine Mobilgerät 20. Sofern nicht genauer definiert ist das Kontrollmodul 16 ausgebildet zum Ausführen der Verfahrensschritte des Verfahrens der Fign. 1a und 1b.

Die nachfolgende Beschreibung bezieht sich sowohl auf das Verfahren der Fign. 1a und 1b als auch auf die Vorrichtung der Fign. 2a und 2b.

In zumindest einigen Ausführungsbeispielen werden das Verfahren und/oder die Vorrichtung 10 genutzt, um kryptografische Schlüssel auf Mobilgeräte, beispielsweise Sensorknoten eines Sensornetzwerks, sicher zu verteilen.

Der zumindest eine kryptografische Schlüssel kann beispielsweise der kryptografische Schlüssel eines symmetrischen Verschlüsselungsverfahrens sein. Beispielsweise kann der zumindest eine kryptografische Schlüssel nach dem Bereitstellen 140 des zumindest einen kryptografischen Schlüssels von einer Zentralstelle (auch engl. Backend) und dem zumindest einen Mobilgerät genutzt werden, etwa zur symmetrischen Verschlüsselung einer (kabellosen) Kommunikation zwischen dem zumindest einen Mobilgerät und der Zentralstelle. Alternativ kann ein asymmetrisches Verschlüsselungsverfahren angewandt werden, und der zumindest eine kryptografische Schlüssel umfasst für jedes Mobilgerät einen privaten Schlüssel sowie für jeden Kommunikationspartner des zumindest einen Mobilgeräts einen öffentlichen Schlüssel, die zusammen zum Verschlüsseln der Kommunikation zwischen dem zumindest einen Mobilgerät und dem Kommunikationspartner/den Kommunikationspartnern genutzt werden können. Der zumindest eine kryptografische Schlüssel kann zum kryptografischen Absichern einer kabellosen Kommunikation des zumindest einen Mobilgeräts vorgesehen sein, etwa zum Authentifizieren des zumindest einen Mobilgeräts gegenüber einem Kommunikationspartner, zum Verschlüsseln der kabellosen Kommunikation des zumindest einen Mobilgeräts (mit einem Kommunikationspartner) und/oder zum Integritätsschutz eines Verbunds aus dem zumindest einen Mobilgerät und einer Zentralstelle verwendet werden. Der kryptografische Schlüssel kann für einen Einsatz in kryptografischen Operationen vorgesehen sein, welche die Kommunikation zwischen dem zumindest einem Mobilgerät und dem Kommunikationspartner absichern. Beispielsweise kann der kryptografische Schlüssel ein kryptografischer Schlüssel zur Authentifizierung des zumindest einen Mobilgeräts gegenüber einem Kommunikationspartner sein. Das Mobilgerät kann sich mit dem kryptografischen Schlüssel oder mit einem aus dem kryptografischen Schlüssel abgeleiteten Wert gegenüber dem Kommunikationspartner authentifizieren. Der kryptografische Schlüssel kann nach der Bereitstellung 140 des zumindest einen kryptografischen Schlüssels von dem zumindest einen Mobilgerät 20 genutzt werden, um das zumindest eine Mobilgerät 20 über den kabellosen Kommunikationskanal gegenüber einem Kommunikationspartner zu Authentifizieren. Alternativ oder zusätzlich kann der zumindest eine kryptografische Schlüssel zum kryptografischen Verschlüsseln der kabellosen Kommunikation des zumindest einen Mobilgeräts vorgesehen sein,

In zumindest einigen Ausführungsbeispielen kann das zumindest eine Mobilgerät 20 ein Sensorknoten eines Sensornetzwerkes sein, etwa ein Sensor zur Aufzeichnung von Umweltdaten oder Umgebungsdaten. Der zumindest eine Sensorknoten kann ausgebildet sein, um sich basierend auf dem zumindest einen kryptografischen Schlüssel gegenüber einer Zentralstelle des Sensornetzwerkes zu authentifizieren oder um basierend auf dem zumindest einen kryptografischen Schlüssel eine kabellose Kommunikation zwischen dem zumindest einen Sensorknoten und der Zentralstelle zu verschlüsseln. Alternativ kann das zumindest eine Mobilgerät ein Smart Home-Gerät (ein Gerät zum Einsatz in einem vernetzten Zuhause) oder ein Gerät des Internet der Dinge sein oder umfassen, etwa ein vernetztes Leuchtmittel, ein Bewegungssensor, ein Türschloss, eine Überwachungskamera, ein Einbruchssensor, ein Wassersensor oder ein kabelloser Schalter. Das zumindest eine Mobilgerät kann beispielsweise ausgebildet sein, um ausschließlich kabellos zu kommunizieren. Das zumindest eine Mobilgerät kann beispielsweise dadurch charakterisiert sein, dass es zur Absicherung einer Kommunikation mit einer Zentralstelle den zumindest einen kryptografischen Schlüssel benötigt. Das zumindest eine Mobilgerät 20 kann beispielsweise eine Mehrzahl von Mobilgeräten 20 sein.

Der kabellose Kommunikationskanal zwischen Kommunikationsmodul 12 und dem zumindest einen Mobilgerät 20 wird durch das Abschirmmittel 14 durch Abschirmen geschützt. In einem bevorzugten Ausführungsbeispiel ist das Abschirmmittel 14 ein abschirmendes Behältnis, etwa eine abschirmende Box oder Kiste, wie sie aus dem Bereich der Hochfrequenzmesstechnik bekannt sind. Das abschirmende Behältnis kann ausgelegt sein, um elektromagnetische (EM)-Felder zu dämpfen, so dass EM-Felder innerhalb des abschirmenden Behältnisses (lediglich) stark gedämpft nach außen dringen und EM-Felder außerhalb des abschirmenden Behältnisses (lediglich) stark gedämpft ins Innere des abschirmenden Behältnisses dringen. Die Schirmwirkung des abschirmenden Behältnisses kann bidirektional sein. Das abschirmende Behältnis kann beispielsweise dazu ausgelegt sein, in einem vorgegebenen Frequenzbereich (etwa im 2.4 GHz-Frequenzbereich) eine Dämpfung von zumindest 50 dB (oder zumindest 60 dB, zumindest 70 dB, zumindest 80 dB, zumindest 100 dB) zwischen einem Innenraum des abschirmenden Behältnisses und einer Umgebung des abschirmenden Behältnisses zu bewirken. Das abschirmende Behältnis kann beispielsweise zumindest teilweise aus Metall bestehen, etwa ein solides Metallgehäuse umfassen Das abschirmende Behältnis kann abschließbar sein, etwa ein Schloss oder einen Schließmechanismus umfassen. Das abschirmende Behältnis kann beispielsweise über einen mechanischen Schlüssel, einen Pin-Kode, einen Smartcode (einen intelligenten Kode) oder eine biometrische Authentifizierung entsperrt werden. Das Kontrollmodul, ein Speichermodul zum Speichern des zumindest einen Schlüssels und/oder Teile des Kommunikationsmoduls 12 kann/können beispielsweise tief im Innern des abschirmenden Behältnisses angeordnet sein. Eine Antenne des Kommunikationsmoduls 12 kann das einzige elektronische Bauteil der Vorrichtung 10 sein, das unmittelbar zugänglich ist. Das abschirmende Behältnis kann zur Aufnahme des zumindest einen Mobilgeräts während des Bereitstellens des zumindest einen kryptografischen Schlüssels ausgelegt sein. Beispielsweise kann das abschirmende Behältnis zur Aufnahme einer Mehrzahl von Mobilgerät zum Bereitstellen des zumindest einen kryptografischen Schlüssels ausgelegt sein. Das Bereitstellen des zumindest einen kryptografischen Schlüssels kann beispielsweise automatisch gestartet werden, wenn das abschirmende Behältnis geschlossen wird. Das Kommunikationsmodul 12 kann ferner innerhalb des abschirmenden Behältnisses angeordnet sein.

Alternativ kann das Abschirmmittel 14 ein aktives Abschirmmittel sein, etwa ein Störsender in einem Frequenzbereich, der von dem kabellosen Kommunikationskanal genutzt wird, und mit einer Abstrahlcharakteristik, die von dem Kommunikationsmodul 12 und dem zumindest einen Mobilgerät weggerichtet ist. Das aktive Abschirmmittel kann aktiviert werden, wenn die Bereitstellung des zumindest einen kryptografischen Schlüssels durchgeführt wird.

In zumindest einigen Ausführungsbeispielen ist das Abschirmen derartig zu verstehen, dass das Abschirmen 120 den kabellosen Kommunikationskanal gegenüber einem weiteren kabellosen Empfänger, der von dem Kommunikationsmodul 12 und dem zumindest einen Mobilgerät 20 verschieden ist, abschirmt. Dabei wird keine vollständige Abschirmung gefordert. Das Abschirmen 120 kann dazu ausgelegt sein, ein Abhören des kabellosen Kommunikationskanals durch einen weiteren kabellosen Empfänger, der von dem Kommunikationsmodul 12 und dem zumindest einen Mobilgerät 20 verschieden ist, zu erschweren. Beispielsweise kann das Abschirmmittel 14 dazu ausgelegt sein, um eine kabellose Kommunikation zwischen der Kommunikationsmodul 12 und dem zumindest einem Mobilgerät 20 über den abgeschirmten kabellosen Kommunikationskanal so abzuschirmen, dass Daten, welche über den abgeschirmten Kommunikationskanal übertragen werden, durch einen weiteren, von dem Kommunikationsmodul 12 und dem zumindest einen Mobilgerät 20 verschiedenen kabellosen Empfänger nicht vollständig rekonstruiert werden können. Das Abschirmmittel 14 kann dazu ausgelegt sein, um eine kabellose Kommunikation zwischen der Kommunikationsmodul 12 und dem zumindest einem Mobilgerät 20 über den abgeschirmten kabellosen Kommunikationskanal so abzuschirmen, dass ein Signal-zu-Rausch-Abstand zwischen der kabellosen Kommunikation und einem Grundrauschen höchstens 10 dB (oder höchstens 5 dB, höchstens 2 dB, höchstens 1 dB, höchstens 0.1 dB) beträgt bei einer Verarbeitung durch einen weiteren, von dem Kommunikationsmodul 12 und dem zumindest einen Mobilgerät (20) verschiedenen, kabellosen Empfänger. Das Abschirmmittel 14 kann dazu ausgelegt sein, um eine kabellose Kommunikation zwischen der Kommunikationsmodul 12 und dem zumindest einem Mobilgerät 20 über den abgeschirmten kabellosen Kommunikationskanal so abzuschirmen, dass eine Signalstärke des kabellosen Kommunikationskanals außerhalb des Abschirmmittels kleiner ist als -100 dBm (oder kleiner als -120 dBm, kleiner als -150 dBm, kleiner als -180 dBm). Ein Empfänger kann beispielsweise außerhalb des Abschirmmittels angeordnet sein, falls zwischen dem weiteren Empfänger und dem Kommunikationsmodul 12 das Abschirmmittel angeordnet ist. Durch das Abschirmen 120 kann der kabellose Kommunikationskanal vor einem Abhören des kabellosen Kommunikationskanals geschützt werden, etwa vor einem Abhören durch den weiteren kabellosen Empfänger. Alternativ oder zusätzlich kann der kabellose Kommunikationskanal durch das Abschirmmittel vor einer Manipulation oder vor einem Störsignal geschützt werden.

Der kabellose Kommunikationskanal kann in Ausführungsbeispielen nicht nur zur Bereitstellung 140 des zumindest einen kryptografischen Schlüssels genutzt werden. Beispielsweise kann der kabellose Kommunikationsstandard nach der Bereitstellung 140 des zumindest einen kryptografischen Schlüssels von dem zumindest einen Mobilgerät 20 genutzt werden, um Nutzdaten des zumindest einen Mobilgeräts 20 zu einem Kommunikationspartner zu übertragen. Die Nutzdaten des zumindest einen Mobilgeräts 20 können beispielsweise Sensordaten eines Sensorknotens sein. Alternativ oder zusätzlich können die Nutzdaten des Mobilgeräts 20 Statusnachrichten und/oder Steuernachrichten des zumindest einen Mobilgeräts umfassen.

In Ausführungsbeispielen basiert der kabellose Kommunikationskanal basiert auf einem kabellosen Kommunikationsstandard. Der kabellose Kommunikationskanal kann beispielsweise auf einem der IEEE-Standards nach IEEE (Institute of Electrical and Electronics Engineers, Institut der Elektro- und Elektronikingenieure) 802.11 basieren. Alternativ kann der kabellose Kommunikationskanal auf einem kabellosen Kommunikationsstandard für Sensornetzwerke basieren, etwa auf einem der IEEE-Standards nach IEEE 1451, auf einem der IEEE-Standards nach IEEE 802.15.4, wie etwa Zig-Bee, WirelessHART (Kabelloser HART, Highway Adressable Remote Transducer, Schnellstraßenadressierbarer entfernter Energiewandler) oder 6LoWPAN (IPv6 over Low power Wireless Personal Area Network, Internetprotokoll der Version 6 über ein niedrigenergetisches kabelloses persönliches Netzwerk), oder dem Constrained Application Protocol (Eingeschränktes Anwendungsprotokoll). In manchen Ausführungsbeispielen kann der kabellose Kommunikationsstandard der einzige kabellose Kommunikationsstandard sein, der von dem zumindest einen Mobilgerät 20 unterstützt wird. Der gleiche kabellose Kommunikationsstandard kann von dem zumindest einen Mobilgerät 20 für ein Empfangen des zumindest einen kryptografischen Schlüssels und für ein Bereitstellen von Nutzdaten verwendet werden. Beispielsweise kann der kabellose Kommunikationsstandard derjenige Kommunikationsstandard sein, der von dem Mobilgerät zur Übertragung von Nutzdaten in einem Regelbetrieb des zumindest einen Regelbetrieb verwendet wird. Vorzugsweise ist der kabellose Kommunikationskanal ein Funk-Kommunikationskanal.

Das Kommunikationsmodul 12 ist ausgebildet, um über den kabellosen Kommunikationsmodul zu kommunizieren, etwa basierend auf dem kabellosen Kommunikationsstandard. In Ausführungsbeispielen kann das Kommunikationsmodul 12 ein kabelloses Kommunikationsmodul sein. Beispielsweise kann das Kommunikationsmodul 12 ausgebildet sein, gleichzeitig mit einer Mehrzahl von Mobilgeräten 20 zu kommunizieren. Das Kommunikationsmodul 12 kann als Mittel zum Kommunizieren, als ein oder mehrere Kommunikationseinheiten und/oder als ein oder mehrere Kommunikationsgeräte ausgebildet sein. Das Kommunikationsmodul 12 kann ein oder mehrere Elemente der Gruppe von ein oder mehrere Leistungsverstärker, ein oder mehrere Filter oder Filterschaltungen, ein oder mehrere Diplexer, ein oder mehrere Duplexer, ein oder mehrere Digital-zu-Analog-Konverter, ein oder mehrere Modulatoren, ein oder mehrere Demodulatoren, ein oder mehrere Mischer, ein oder mehrere Antennen etc. umfassen. Das Kommunikationsmodul 12 ist mit dem Kontrollmodul 16 gekoppelt.

In zumindest manchen Ausführungsbeispielen umfasst das Bereitstellen 140 des zumindest einen kryptografischen Schlüssels ein Übertragen des zumindest einen kryptografischen Schlüssels zu dem zumindest einem Mobilgerät. Beispielsweise kann das Bereitstellen 140 des zumindest einen kryptografischen Schlüssels jeweils einen kryptografischen Schlüssel für jedes Mobilgerät übertragen/bereitstellen. Alternativ oder zusätzlich kann das Bereitstellen 140 des zumindest einen kryptografischen Schlüssels einen kryptografischen Schlüssel für jeden Kommunikationspartner des zumindest einen Mobilgeräts übertragen, etwa als symmetrische Kommunikationsschlüssel zwischen dem zumindest einen Mobilgerät und den ein oder mehreren Kommunikationspartnern des Mobilgeräts. Nach dem Bereitstellen des zumindest einen kryptografischen Schlüssels kann der zumindest eine kryptografische Schlüssel von der Vorrichtung 10 gelöscht werden, etwa durch das Kontrollmodul 16. Beim Bereitstellen 140 des zumindest einen kryptografischen Schlüssels kann der abgeschirmte kabellose Kommunikationskanal genutzt werden, um den zumindest einen kryptografischen Schlüssel zum Mobilgerät zu übertragen.

In Ausführungsbeispielen kann die das Kontrollmodul 16 einem beliebigen Controller oder Prozessor oder einer programmierbaren Hardwarekomponente entsprechen. Beispielsweise kann das Kontrollmodul 16 auch als Software realisiert sein, die für eine entsprechende Hardwarekomponente programmiert ist. Insofern kann das Kontrollmodul 16 als programmierbare Hardware mit entsprechend angepasster Software implementiert sein. Dabei können beliebige Prozessoren, wie Digitale Signalprozessoren (DSPs) oder Mikroprozessoren zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung des Kontrollmoduls 16 denkbar. Die Vorrichtung 10 und/oder das Kontrollmodul 16 kann ferner ein Speichermodul zum Speichern des zumindest einen kryptografischen Schlüssels und/oder einer Mehrzahl von kryptografischen Schlüsseln, wie sie im Folgenden eingeführt werden, umfassen. Das Speichermodul ist mit dem Kontrollmodul 16 gekoppelt. Das Speichermodul kann beispielsweise zumindest ein Element der Gruppe von computerlesbares Speichermedium, magnetisches Speichermedium, optisches Speichermedium, Festplatte, Flash-Speicher, Diskette, Zufallszugriffsspeicher (auch engl. Random Access Memory) umfassen. In manchen Ausführungsbeispielen sind eine Programmierung und/oder ein Betriebssystem durch einen Schreibschutz vor Veränderungen geschützt. In manchen Ausführungsbeispielen kann das Kontrollmodul 16 und/oder das Speichermodul über ein Trusted Platform Module (Modul für eine Plattform, der vertraut wird) gesichert sein. Das Speichermodul kann beispielsweise einem kryptografisch geschützten Speicher entsprechen.

In manchen Ausführungsbeispielen umfasst das Verfahren, wie in Fig. 1b gezeigt, ferner Bestimmen 130, ob der kabellose Kommunikationskanal durch das Abschirmmittel 14 (ausreichend) abgeschirmt ist. Das Kontrollmodul 16 kann ausgebildet sein, um zu bestimmen, ob der kabellose Kommunikationskanal durch das Abschirmmittel 14 (ausreichend) abgeschirmt ist. Beispielsweise kann dabei direkt oder indirekt bestimmt oder abgeschätzt werden, ob eine Dämpfung des kabellosen Kommunikationskanals durch das Abschirmmittel ausreichend stark ist. Der kabellose Kommunikationskanal kann ausgereichend abgeschirmt sein (oder als ausreichend abgeschirmt gelten), falls Daten, welche über den abgeschirmten Kommunikationskanal übertragen werden, durch einen weiteren, von dem Kommunikationsmodul 12 und dem zumindest einen Mobilgerät 20 verschiedenen kabellosen Empfänger (voraussichtlich) nicht vollständig rekonstruiert werden können. Der kabellose Kommunikationskanal kann ausgereichend abgeschirmt sein (oder als ausreichend abgeschirmt gelten), falls eine Signalstärke des kabellosen Kommunikationskanals außerhalb des Abschirmmittels kleiner ist als -100 dBm (oder kleiner als -120 dBm, kleiner als -150 dBm, kleiner als -180 dBm). Dazu kann beispielsweise direkt die Signalstärke oder ein Signal-zu-Rausch-Abstand des kabellosen Kommunikationskanals außerhalb des Abschirmmittels gemessen werden, oder es kann überprüft werden, ob sich das Abschirmmittel in einem vorbestimmten Zustand befindet, etwa ob das abschirmende Behältnis geschlossen ist. In manchen Ausführungsbeispielen kann sowohl die Signalstärke/der Signal-zu-Rausch-Abstand als auch ob das abschirmende Behältnis geschlossen ist bestimmt werden, um eine Plausibilität der Messung der Signalstärke/des Signal-zu-Rausch-Abstands zu verifizieren. Ein Empfänger kann beispielsweise als außerhalb des Abschirmmittels angeordnet gelten, falls zwischen dem weiteren Empfänger und dem Kommunikationsmodul 12 das Abschirmmittel angeordnet ist. Beispielsweise kann das Bestimmen 130, ob der kabellose Kommunikationskanal durch das Abschirmmittel 14 ausreichend abgeschirmt ist, darauf basieren, ob das abschirmende Behältnis geschlossen ist. Ist das abschirmende Behältnis geschlossen, so kann der kabellose Kommunikationskanal ausreichend abgeschirmt sein oder als ausreichend abgeschirmt gelten. Alternativ kann das Bestimmen 130, ob der kabellose Kommunikationskanal durch das Abschirmmittel 14 ausreichend abgeschirmt ist, ein Messen einer Signalstärke einer kabellosen Kommunikation über den kabellosen Kommunikationskanal nach dem Abschirmen durch das Abschirmmittel 14 umfassen. Beispielsweise kann das Bestimmen 130, ob der kabellose Kommunikationskanal durch das Abschirmmittel 14 ausreichend abgeschirmt ist, ein Messen eines Signal-zu-Rauschen-Verhältnis der kabellosen Kommunikation über den kabellosen Kommunikationskanal nach dem Abschirmen durch das Abschirmmittel 14 (außerhalb des Abschirmmittels) umfassen. Liegt die gemessene Signalstärke oder das gemessene Signal-zu-Rauschen-Verhältnis unter einem vorgegebenen Schwellenwert, so kann der kabellose Kommunikationskanal ausreichend abgeschirmt sein oder als ausreichend abgeschirmt gelten.

Die Vorrichtung 10 kann, wie in Fig. 2b gezeigt, ferner ein Sensormodul 18 umfassen, ausgebildet zum Bestimmen (zusammen mit dem Kontrollmodul 16), ob der kabellose Kommunikationskanal ausreichend durch das Abschirmmittel 14 abgeschirmt ist. Beispielsweise kann das Sensormodul 18 einen elektromechanischen Sensor oder ein elektromechanisches Schloss umfassen. Das Sensormodul 18 kann ausgebildet sein, um zu bestimmen, ob das abgeschirmte Behältnis geschlossen ist. Dazu kann das Sensormodul 18 ausgebildet sein, um einen Stromfluss über eine Strombrücke, die bei geschlossenem abgeschirmtem Behältnis geschlossen ist, zu messen. Fließt ein Strom, so ist das abgeschirmte Behältnis geschlossen und kann der kabellose Kommunikationskanal ausreichend abgeschirmt sein oder als ausreichend abgeschirmt gelten. Alternativ kann das Sensormodul 18 ausgebildet sein, um elektromagnetische Felder zu messen. Das Sensormodul 18 kann ausgebildet sein, um eine Signalstärke oder ein Signal-zu-Rausch-Verhältnis des kabellosen Kommunikationskanals außerhalb des Abschirmmittels zu messen. Dabei kann das Sensormodul 18 beispielsweise ausgebildet sein, um die aufgenommenen Signale dem Kontrollmodul 16 zum Auswerten bereitzustellen. Das Kontrollmodul 16 kann ausgebildet sein, um die durch das Sensormodul 18 gemessenen Sensordaten zu analysieren und die Entscheidung zu treffen, ob der kabellose Kommunikationskanal ausreichend durch das Abschirmmittel 14 abgeschirmt ist. In manchen Ausführungsbeispielen kann das Sensormodul 18 ausgebildet sein, um eine Manipulation des Abschirmmittels 14 zu bestimmen.

Das Kontrollmodul 16 ist mit dem Sensormodul 18 gekoppelt. Das Kontrollmodul 16 kann ausgebildet sein, um den zumindest einen kryptografischen Schlüssel bereitzustellen, falls das Sensormodul 18 bestimmt, dass der kabellose Kommunikationskanal ausreichend durch das Abschirmmittel 14 abgeschirmt ist.

Das Bereitstellen 140 des zumindest einen kryptografischen Schlüssels kann durchgeführt werden, falls das Bestimmen 130, ob der kabellose Kommunikationskanal durch das Abschirmmittel 14 abgeschirmt ist, feststellt, dass der kabellose Kommunikationskanal durch das Abschirmmittel 14 ausreichend abgeschirmt ist. Das Bereitstellen 140 des zumindest einen kryptografischen Schlüssels kann beispielsweise unterbrochen werden, falls das Bestimmen 130, ob der kabellose Kommunikationskanal durch das Abschirmmittel 14 ausreichend abgeschirmt ist, feststellt, dass der kabellose Kommunikationskanal nicht mehr ausreichend durch das Abschirmmittel 14 abgeschirmt ist. Beispielsweise kann das Bereitstellen 140 des zumindest einen kryptografischen Schlüssels unterbrochen werden, falls das Bestimmen 130, ob der kabellose Kommunikationskanal durch das Abschirmmittel 14 ausreichend abgeschirmt ist, feststellt, dass das abschirmende Behältnis nicht geschlossen ist / offen ist. Beispielsweise kann das Bestimmen 130, ob der kabellose Kommunikationskanal durch das Abschirmmittel 14 ausreichend abgeschirmt ist, periodisch oder kontinuierlich durchgeführt werden. Alternativ kann das Bestimmen 130, ob der kabellose Kommunikationskanal durch das Abschirmmittel 14 ausreichend abgeschirmt ist, ereignisbasiert durchgeführt werden, etwa falls durch ein Sensormodul eine Veränderung festgestellt wird. Wird bestimmt 130, dass der kabellose Kommunikationskanal nicht mehr ausreichend durch das Abschirmmittel 14 abgeschirmt ist, so kann der zumindest eine kryptografische Schlüssel gelöscht werden (und/oder die im Weiteren eingeführte Mehrzahl von kryptografischen Schlüsseln).

In zumindest einigen Ausführungsbeispielen umfasst das Verfahren, wie in Fig. 1b gezeigt, ferner Erhalten 110 einer Mehrzahl von kryptografischen Schlüsseln über einen gesicherten Kanal, etwa von einer Zentralstelle. Das Verfahren kann ferner ein Speichern der Mehrzahl von kryptografischen Schlüsseln auf dem Speichermodul umfassen. Die Mehrzahl von kryptografischen Schlüsseln umfasst in zumindest einigen Ausführungsbeispielen den zumindest einen kryptografischen Schlüssel. In zumindest einigen Ausführungsbeispielen sind die kryptografischen Schlüssel der Mehrzahl von kryptografischen Schlüssel nicht aufeinander basierend und/oder nicht voneinander ableitbar. Beispielsweise kann der gesicherte Kanal ein kryptografisch gesicherter kabelloser Kommunikationskanal sein. Alternativ kann der gesicherte Kanal ein kabelgebundener Kanal sein, etwa ein Kabel zwischen der Zentralstelle und der Vorrichtung 10. Alternativ kann der gesicherte Kanal auf einem Speichergerät basieren, das eingelesen wird. Die Vorrichtung 10 kann eine Schnittstelle für das Speichergerät umfassen, etwa eine USB-Schnittstelle (Universeller Serieller Bus). Vor dem Erhalten 110 kann eine Autorisierung zum Erhalten 110 der Mehrzahl von kryptografischen Schlüsseln abgefragt werden, etwa über eine Tastatur, über einen berührungsempfindlichen Bildschirm oder über einen biometrischen Sensor.

Das Bereitstellen 140 des zumindest einen kryptografischen Schlüssels basiert vorzugsweise auf der Mehrzahl von kryptografischen Schlüsseln. Beispielsweise kann das Bereitstellen 140 des zumindest einen kryptografischen Schlüssel die kryptografischen Schlüssel der Mehrzahl von kryptografischen Schlüsseln an das zumindest eine Mobilgerät verteilen. In manchen Ausführungsbeispielen wird der bereitgestellte 140 zumindest eine kryptografische Schlüssel aus der Mehrzahl von kryptografischen Schlüsseln nach dem Bereitstellen 140 an das zumindest eine Mobilgerät 20 entfernt.

In manchen Ausführungsbeispielen umfasst das Verfahren, wie in Fig. 1b gezeigt, ferner Erkennen 112 einer möglichen Manipulation des Abschirmmittels 14 und Löschen 114 der Mehrzahl von kryptografischen Schlüsseln, falls eine mögliche Manipulation des Abschirmmittels 14 erkannt wird. Beispielsweise kann das Kontrollmodul 16 ausgebildet sein, um die mögliche Manipulation des Abschirmmittels 14 über das Sensormodul 18 zu erkennen, etwa durch Messen der Signalstärke des abgeschirmten kabellosen Kommunikationskanals außerhalb des Abschirmmittels. Alternativ kann die Vorrichtung weitere Sensormodule zur Erkennung der möglichen Manipulation umfassen, etwa einen Erschütterungssensor oder eine Schaltung, dazu ausgelegt ist, eine Manipulation eines Schlosses oder eines Verschlusses des abgeschirmten Behältnisses zu erkennen. Alternativ oder zusätzlich kann das Erkennen 112 der möglichen Manipulation ein Messen eines Zeitraums, während dessen das abgeschirmte Behältnis nicht geschlossen ist, umfassen. Eine mögliche Manipulation des Abschirmmittels kann beispielsweise erkannt 112 werden, falls der gemessene Zeitraum über einem Zeit-Schwellenwert liegt. Alternativ oder zusätzlich kann das Erkennen 112 ein Bestimmen einer Position des Abschirmmittels umfassen. Eine mögliche Manipulation des Abschirmmittels kann erkannt 112 werden, falls die bestimmte Position von einer vorgesehen Position des Abschirmmittels abweicht.

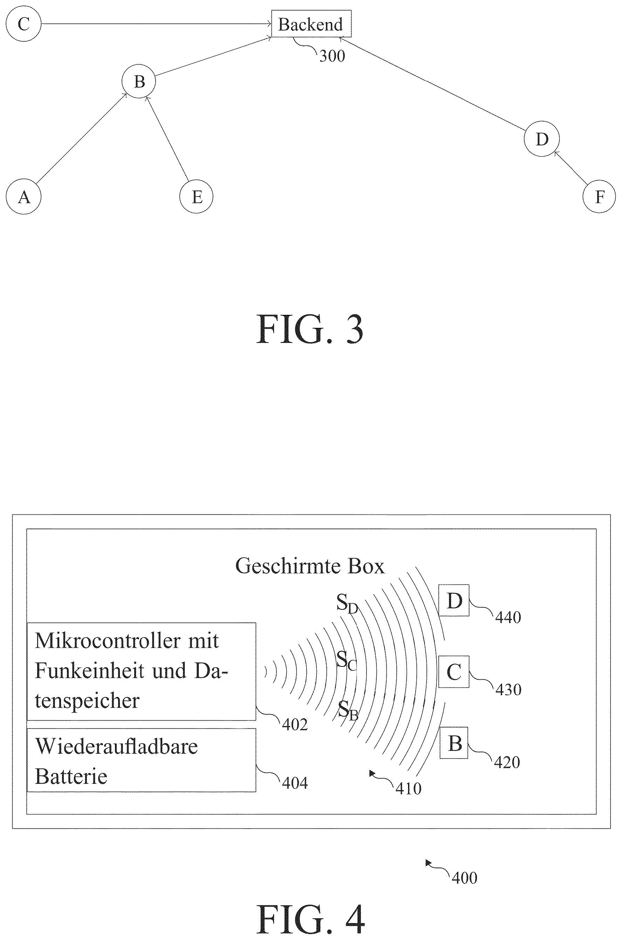

Mehr Details und Aspekte des Verfahrens und der Vorrichtung 10 werden in Verbindung mit dem Konzept oder Beispielen genannt, die vorher oder nachher (Fign. 3 - 7) beschrieben wurden. Das Verfahren oder die Vorrichtung 10 kann ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben wurden.

Fig. 3 zeigt ein Sensornetzwerk mit Backend (Daten-Sammelstelle/Zentralstelle). Die Sensorknoten A bis F erfassen mit ihren Sensoren Daten und übertragen diese an das Backend 300, welches das Ziel aller Daten ist. Eine weitere Bezeichnung für solch eine Daten-Sammelstelle lautet Concentrator (Zusammensteller). Da die Sammelstelle häufig mit dem Internet verbunden ist, wird sie auch als Gateway (Übergabepunkt) bezeichnet

Wie in allen vernetzten Systemen können in Sensornetzwerken Schutzziele aufgestellt werden. Nicht immer ist jedes Schutzziel gleichermaßen wichtig. Typischerweise sind jedoch sicherzustellen:

- Vertraulichkeit (Confidentiality) der Nachrichten
- Integrität (Integrity) der Nachrichten
- Verfügbarkeit (Availability) des Netzwerks
- Identität (Identification) der Netzwerkteilnehmer
- Zugangskontrolle (Access Control) zum Netzwerk

Identität kann notwendig sein, um einen Sensorknoten eindeutig identifizieren zu können. MAC-Adressen (engl. Media Access Control, Medienzugangskontrolladressen) und IP-Adressen (Internetprotokoll-Adressen) sind möglicherweise ungeeignete Identitäten. Erstere lassen sich in manchen Fällen leicht fälschen, während letztere dynamisch vergeben werden und somit häufig nicht eindeutig sind.

Eine sichere Identität kann beispielsweise derart erzeugt werden, dass ein geheimer Schlüssel ausschließlich zwei Kommunikationsteilnehmern bekannt ist. Durch die Kenntnis des Schlüssels kann ein Teilnehmer beweisen, dass er der ist, für den er sich ausgibt.

Um den Zugang zu einem Netzwerk zu limitieren, kann dieses etwa durch einen Zugangsschlüssel geschützt werden. Nur ein Sensorknoten, der den Zugangsschlüssel kennt, kann dem Netzwerk beitreten. Die Zugangskontrolle kann in manchen Beispielen auch durch eine "Gästeliste" erzielt werden. Nur wenn der Sensorknoten auf der Liste steht, kann er dem Netzwerk beitreten. Eine solche Liste benötigt wieder sichere Identitäten, wie im vorigen Absatz beschrieben.

Aus obigen Beispielen wird ersichtlich, dass zur Erfüllung der Schutzziele die Kommunikationspartner meist ein Geheimnis, z.B. in Form eines (kryptografischen) Schlüssels, teilen müssen. Es ist möglich, die Sensorknoten bereits während der Produktion mit Schlüsseln zu versehen. Der Hersteller generiert beispielsweise Schlüssel und überträgt diese auf die Sensorknoten. Dies kann jedoch mehrere Nachteile haben. Zum Einen kann es notwendig sein, die Schlüssel beim Anwender dessen Backend bekannt zu machen. Dies kann einen Aufwand für den Anwender bedeuten. Zum anderen kann der Hersteller der Sensorknoten die Schlüssel kennen, was ein Sicherheitsrisiko darstellen könnte. Der Anwender kann nicht wissen, ob die Schlüssel während der Erzeugung oder des Transportes zum Anwender kompromittiert wurden.

Folglich kann es sicherer sein, wenn der Anwender Schlüssel für die Sensorknoten selbst erzeugt. Wenn die Schlüssel im Backend erzeugt werden, können sie an die Sensorknoten verteilt werden. Diese Verteilung soll vorteilhafterweise schnell, einfach und sicher ablaufen.

Sicher kann bedeuten, dass ein Angreifer weder den Austausch des Schlüssels belauschen noch den Schlüssel im Transit verändern kann. Ein Übertragungsweg, der diesen Schutz gewährleistet, wird auch sicherer Kanal genannt. Der abgeschirmte kabellose Kommunikationskanal kann solch ein sicherer Kanal sein. Es kann genügen, wenn ein sicherer Kanal zum Schlüsselaustausch einmalig zur Verfügung steht. Anschließend können mit Hilfe der jetzt beiden Kommunikationspartnern bekannten geheimen Schlüssel mittels kryptografischer Verfahren weitere sichere Kanäle aufgebaut werden.

Um einen sicheren Kanal zum Schlüsselaustausch aufzubauen, können asymmetrische kryptografische Verfahren benutzt werden. Die hierzu verwendeten öffentlichen Schlüssel können hierzu an eine Identität gebunden werden. Hierzu werden beispielsweise Zertifikate verwendet, welche durch eine Public Key Infrastructure (PKI, Infrastruktur zur Verwaltung Öffentlicher Schlüssel) verwaltet werden.

Gegen die Verwendung asymmetrischer Verfahren und Zertifikaten bei Sensorknoten kann in manchen Fällen der hohe Implementierungsaufwand, die damit einhergehende zunehmende Komplexität der Software und die Einführung fehlerbehafteter Funktionen, wie z.B. Zertifikat-Parsern sprechen.

Hinzu kommt, dass das asymmetrische Verfahren in manchen Fällen nur ein einziges Mal verwendet werden muss. Nachdem auf diesem Wege ein geheimer Schlüssel ausgetauscht wurde, kann dieser etwa fortan verwendet werden, um die Kommunikation zwischen Sensorknoten und Backend mittels symmetrischer kryptografischer Verfahren abzusichern. Aufgrund dessen versuchen zumindest manche Ausführungsbeispiele, asymmetrische Kryptografie in Sensornetzwerken zu vermeiden.

Eine Verbindung per Kabel stellt beispielsweise, eine Möglichkeit dar, einen sicheren Kanal zu erzeugen. Ein Angreifer benötigt physischen Zugang zum Kabel, um an die über das Kabel übertragenen Geheimnisse zu gelangen. Bei einer großen Anzahl an Sensorknoten kann es jedoch nicht praktikabel sein, jeden einzelnen von ihnen per Kabel mit dem Backend zu verbinden. Zusätzlich kann die Implementierung eines Kabel-Interfaces in den Sensorknoten zusätzliche Kosten mit sich bringen.

In Ausführungsbeispielen erfolgt eine Verteilung der Schlüssel per Funk. Die Erzeugung eines sicheren Funkkanals zur Übertragung eines kryptografischen Schlüssels ohne ein bereits geteiltes Geheimnis kann jedoch eine Herausforderung darstellen.

Ausführungsbeispiele schaffen eine Vorrichtung und ein Verfahren zur Erzeugung eines gesicherten sicheren Kanals über Funk. Sie können dem Anwender ermöglichen, eine große Anzahl an geheimen Schlüsseln schnell, einfach und sicher zwischen den Sensorknoten und dem Backend zu verteilen.

Zur Schaffung eines sicheren Kanals, welcher zur Übertragung eines Schlüssels genutzt werden kann, können mehrere Ansätze verwendet werden. Diese werden nach ihrer technischen Realisierung klassifiziert.

In manchen Fällen kann das Geheimnis In-Band (über den gleichen Übertragungsweg) übertragen werden. In-Band bedeutet, dass die geheime Information auf demselben Kanal (d.h. gleiches Übertragungsmedium und Kommunikationsprotokoll) übertragen werden, wie im normalen Betriebsmodus die Sensordaten. Dadurch muss beispielsweise keine zusätzliche Hardware verwendet werden, was die notwendigen Komponenten reduzieren kann.

Die geheime Information kann prinzipiell im Klartext übertragen werden. Die Sicherheit dieses Verfahrens kann darauf basieren, dass zu wenig Signalleistung den Angreifer erreicht, sodass er die Nachricht nicht mitlesen kann. Es ist prinzipiell möglich, die Sendeleistung so stark zu reduzieren, dass ein Angreifer sehr nahe sein muss, um die im Klartext übertragene geheime Information abhören zu können. Allerdings ist gängige Funk-Hardware häufig nicht dafür ausgelegt, mit derart geringer Sendeleistung zu arbeiten. Ausführungsbeispiele können diese Einschränkung umgehen und die Übertragung des Geheimnisses In-Band und im Klartext ermöglichen, ohne dass Modifikationen an der Funk-Hardware notwendig sind.

Das Geheimnis kann ferner mittels asymmetrischer kryptografischer Verfahren übertragen werden. Kommunikationspartner müssen über zusätzliche Maßnahmen authentifiziert werden, die zusätzlichen Aufwand mit sich bringen.

In manchen Fällen kann auf eine Authentifizierung verzichtet werden. Die öffentlichen Schlüssel können auch ohne zusätzliche Authentifizierungsinformation ausgetauscht werden, was jedoch Man in the Middle-Angriffe (MITM, Mann in der Mitte-Angriffe, Manipulation einer Kommunikation zwischen zwei Kommunikationspartnern durch einen Dritten) ermöglichen kann.

In einigen Fällen können auch selbst-authentifizierende Verfahren verwendet werden. In einer Quelle kann ein spezielles Nachrichtenformat beschrieben werden, durch welches die Nachrichten sich selbst authentifizieren. Dieses hat, ebenso wie das Konzept der Identity-Based Cryptography (IBC, Identitätsbasierte Kryptographie), vorwiegend akademische Relevanz.

In zumindest manchen Fällen kann das Geheimnis Out of Band (über einen anderen Übertragungsweg) übertragen werden. Out of Band bedeutet, dass die geheime Information auf einem anderen Kanal übertragen wird, als die Sensordaten im normalen Betrieb. Um den zusätzlichen Kommunikationskanal nutzen zu können, sind möglicherweise zusätzliche Komponenten erforderlich, was die Kosten erhöhen kann.

In zumindest einigen Fällen kann die Übertragung im Klartext über einen Kanal mit geringer Reichweite erfolgen. Die Kanäle mit geringer Reichweite beziehen ihre Sicherheit daraus, dass ein Angreifer physikalisch anwesend sein muss und auf diese Weise einfach bemerkt werden kann.

Technisch kann ein Kanal mit geringer Reichweite auf vielfältige Weise realisiert werden:

- Kabelgebundene Übertragung
- Optischer Übertragungsweg
- Akustischer Übertragungsweg
- Funkübertragung mit geringer Reichweite
- Der Anwender als Authentifizierer

Kabelgebundene Übertragung: Werden geheime Informationen kabelgebunden übertragen, so muss der Angreifer meist physikalischen Zugang zu dem Kabel haben. Im Bereich der Sensornetzwerke findet dieses Verfahren Anwendung bei den Funkstandards SIGFOX und LoRAWAN (Long Range Wide Area Network, Großräumiges Netz mit großer Reichweite). Bei dem IEEE Standard 802.15.4 (Institute of Electrical and Electronics Engineers, Institut der Elektro- und Elektronikingenieure) und dem darauf aufbauenden Funkstandard 6LoWPAN (IPv6 over Low power Wireless Personal Area Network, Internetprotokoll der Version 6 über ein niedrigenergetisches kabelloses persönliches Netzwerk) ist nicht spezifiziert, wie der Schlüsselaustausch zwischen Backend und Sensorknoten stattfinden muss. Daher wird der Anwender den geheimen Schlüssel typischerweise während des Programmiervorgangs und damit per Kabel auf den Sensorknoten übertragen.

Optischer Übertragungsweg: Einfache Implementierungen verwenden eine Leuchtdiode als Sender sowie einen Fototransistor als Empfänger. Statt einer Leuchtdiode kann ein geheimer Schlüssel auch durch das Blinken eines Smartphone-Bildschirms (Bildschirm eines programmierbaren Mobiltelefons) übertragen werden. Wird das Smartphone-Display nahe an den Empfänger gehalten, so kann dieser wiederum mit einem Fototransistor die Helligkeitswerte erfassen und daraus schließlich den geheimen Schlüssel rekonstruieren. Ein Kommunikationspartner kann den geheimen Schlüssel auch in Form eines Barcodes oder QR-Codes optisch abbilden. Das zu authentifizierende Gerät kann diese über eine Kamera einlesen. Ein bei der Produktion auf dem Gerät aufgebrachter QR-Code kann die Identität des Gerätes bilden. Sie kann zusammen mit einem asymmetrischen Verschlüsselungsverfahren verwendet werden, um den Zugangsschlüssel zum WLAN des Anwenders an das SmartHome-Produkt (Produkt für ein intelligent vernetztes Zuhause) zu übertragen. Dieses Verfahren skaliert in manchen Fällen schlecht mit einer zunehmenden Anzahl an Geräten, da der QR-Code eines jeden Produktes mit der Kamera erfasst werden muss.

Funkübertragung mit geringer Reichweite: Funkstandards wie z.B. Near Field Communications (NFC, Nahfeldkommunikation) oder Radio Frequency Identification (RFID, Hochfrequenzidentifizierung) können auf Grund ihrer geringen Reichweite zur Übertragung geheimer Informationen verwendet werden. Die geringe Reichweite kann durch induktive Kopplung von Sender und Empfänger im Nahfeld sichergestellt werden. Die Signalstärke nimmt in dritter Potenz mit der Reichweite vom Sender ab. Hat man ein tragbares Gerät mit NFC-Hardware, z.B. ein Smartphone, so kann man dieses über einen sicheren Kanal einmalig authentifizieren. Anschließend hat man ein mobiles authentifiziertes Token (Zeichen), welches in die Nähe weiterer zu authentifizierender Geräte gebracht werden kann. Diese werden mittels NFC dann ebenfalls authentifiziert. Die Anwendbarkeit dieses Verfahrens wird in Sensornetzwerken möglicherweise dadurch eingeschränkt, dass Sensorknoten aus Kostengründen typischerweise nicht mit NFC Empfängern ausgestattet werden.

Der Anwender aus Authentifizierer: Ein Mensch kann als Kanal mit geringer Reichweite aufgefasst werden. Es wurden verschiedene Protokolle entwickelt, bei denen die Kommunikationspartner eine geheime Information aushandeln. Die Information wird dem Anwender z.B. in Form einer Zahlenfolge gezeigt. Anschließend muss er z.B. durch Drücken eines Knopfes bestätigen, dass die Zahlenfolgen übereinstimmen.

Möglich ist auch, dass der Anwender durch eine Aktion, z.B. das Drücken eines Knopfes die Kommunikationspartner temporär in die Lage versetzt, miteinander zu kommunizieren. Die "Authentifizierung" kann dadurch erzielt werden, dass in dem durch den Anwender initiierten zeitlich kurzen Kommunikationsvorgang mit hoher Wahrscheinlichkeit nur die Legitimen Kommunikationspartner auch tatsächlich kommunizieren. Dabei kann beispielsweise auf Knopfdruck ein kabelloser Zugangspunkt (auch engl. Wireless Access Point) erstellt werden, zu dem sich ein Smartphone verbinden kann und die Zugangsdaten zum "eigentlichen" Heimnetzwerk hinterlegen kann. Ein ähnliches Verfahren kommt bei Wireless Access Points zum Einsatz, wenn das Protokoll Wifi-Protected Setup (WPS, Lokales Kabelloses Netzwerk mit geschützter Einrichtung) im Modus Push Button (Knopf drücken) angewendet wird. Die anschließende Kommunikation erfolgt In-Band. Das manuelle Starten der Kommunikation durch den Anwender erhöht die Sicherheit dann, wenn der Anwender davon ausgehen kann, dass zum Zeitpunkt des Knopfdrucks kein Angreifer präsent ist. Diese Annahme kann aber schwer überprüft werden. Die Authentifizierung von Kommunikationspartnern kann auch dadurch erfolgen, dass der Anwender ein Token, z.B. einen USB-Stick (Universal Serial Bus, Universeller Serieller Bus, Kompaktes Speicher- oder Peripheriegerät mit USB-Schnittstelle), nacheinander mit beiden Kommunikationspartnern verbindet. Ebenfalls möglich ist, dass der Anwender eine geheime Information in beide Kommunikationspartner eingibt, z.B. textuell oder eine Geste, die durch Sensoren erfasst wird. Der Unterschied zu dem in Bezug auf Funkübertragung mit geringer Reichweite beschriebenen Verfahren besteht darin, dass hier direkter physischer Kontakt hergestellt wird. Die Reichweite wird also nochmal verkleinert.

Unter den Begriffen Reality- oder auch Social Mining (Sammeln von Information aus dem echten Leben oder von Informationen über Sozialkontakte) werden Verfahren zusammengefasst, welchen die Annahme zu Grunde liegt, dass jedes kommunizierende technische Gerät einem Menschen zuzuordnen ist. Es wird versucht, Vertrauen zwischen Menschen auf die technischen Geräte zu übertragen, um diese gegenseitig zu authentifizieren.

Ansätze, in denen der Anwender durch direkte Aktionen als Authentifizierer arbeitet, skalieren häufig schlecht mit einer zunehmenden Anzahl an Sensorknoten. Die Aktionen, die der Anwender ausführen muss, nehmen meist linear mit der Anzahl der Sensorknoten zu.

Eine andere Möglichkeit der Gewinnung gemeinsamer Schlüssel basiert auf der Gewinnung gemeinsamer Entropie aus der Umgebung. Die Grundidee ist, dass zwei Kommunikationspartner in einer ähnlichen räumlichen Umgebung durch ihre Sensoren ähnliche Messwerte erfassen. Ein Angreifer, der sich nicht in direkter räumlicher Nähe befindet, kann diese Messwerte meist nicht nachbilden. Nach den Messungen verfügen die Kommunikationspartner über gemeinsame Entropie, aus der beide denselben geheimen Schlüssel generieren können. Entropie kann etwa aus dem Rauschen des Übertragungskanals gewonnen werden. Die Geschwindigkeit, mit der Entropie extrahiert werden kann und damit die Dauer, bis ein geheimer Schlüssel erzeugt werden kann, hängen von der Stärke des Rauschens im Kanal ab. Dabei kann das Rauschen im Kanal beispielsweise künstlich erhöht werden. Zudem kann eine Authentifizierung Out of Band erfolgen. Statt aus dem Rauschen des Übertragungskanals kann gemeinsame Entropie auch aus Umgebungsgeräuschen gewonnen werden. Trägt ein Mensch zwei Geräte bei sich, die miteinander kommunizieren sollen, so können diese gemeinsame Entropie daraus gewinnen, dass sie die Bewegungsmuster des Menschen aufzeichnen Dieses Verfahren lässt sich zu den vorherig vorgestellten Verfahren, die durch den Anwender ausgeführt werden, dahingehend abgrenzen, dass dort der Mensch eine bewusste Aktion an beiden Geräten ausführen muss. Hier dient der Mensch passiv als Quelle von Entropie. Solche biometrische Verfahren sind möglicherweise nicht für jede Anwendung geeignet. Biometrische Informationen aus Bewegungsdaten haben geringe Entropie. Zusätzlich müssen die erfassten Daten meist aufbereitet werden, um z.B. Messungenauigkeiten und Drift der Sensoren zu reduzieren oder verschiedene Messpositionen am Körper vergleichbar zu machen.

Ausführungsbeispiele schaffen eine Vorrichtung und ein Verfahren zur kabellosen Verteilung kryptografischer Schlüssel. Ausführungsbeispiele basieren dabei auf der Erkenntnis, dass eine Abschirmung eines kabellosen Austauschs von kryptografischen Schlüsseldaten, etwa durch ein geschirmtes Behältnis, eine sicher Übertragung der Schlüsseldaten ermöglichen kann. Zumindest manche Ausführungsbeispiele schaffen eine portable Vorrichtung zur Erzeugung eines sicheren Kanals zwischen einem Backend und sehr vielen Sensorknoten zur Verteilung von Geheimnissen mittels Funk.

Zumindest einige Ausführungsbeispiele basieren auf einer Box (Kiste), die elektromagnetische (EM) Felder abschirmt. Diese Box kann beispielsweise das Abschirmmittel 14 von Fig. la-2b darstellen, etwa das abschirmende Behältnis. Die Schirmwirkung einer solchen Box ist meist bidirektional. Im Inneren der Box erzeugte EM-Felder erfahren auf ihrem Weg nach außen eine starke Dämpfung. Im Inneren der Box kann ein Mikrocontroller (etwa ein Kontrollmodul 16 von Fig. 2a; 2b) mit integriertem Funkmodul (etwa ein Kommunikationsmodul 12) und integriertem Flash-Datenspeicher angebracht sein. Die Spannungsversorgung dieser Komponenten können durch eine wieder aufladbare Batterie sichergestellt werden. In manchen Ausführungsbeispielen kann die Vorrichtung 10 der Fign. 2a und/oder 2b eine (wiederaufladbare) Batterie für eine Stromversorgung der Vorrichtung 10 umfassen.

Nun können Empfänger (etwa das zumindest eine Mobilgerät 20) der geheimen Schlüssel (etwa des zumindest einen kryptografischen Schlüssels) in der Box platziert werden. Bei diesen Empfängern (Mobilgeräten 20) kann es sich z.B. um Sensorknoten handeln. Prinzipiell kann aber jedes Gerät als Empfänger in Frage kommen, welches in der Lage ist, über Funk zu kommunizieren, etwa Geräte des Internet der Dinge (Internet of Things, IoT), Netzwerkkameras, vernetzte Leuchtmittel und ähnliches. Im Folgenden werden zu Gunsten der Lesbarkeit jedoch immer Sensorknoten als Empfänger angenommen.

Die Menge der Sensorknoten (Mobilgeräte), die in der Box platziert werden können, wird in manchen Fällen (nur) durch die räumlichen Abmessungen der Box und derjenigen der Sensorknoten limitiert. Innerhalb der geschirmten Box können nun über Funk (etwa über den abgeschirmten kabellosen Kommunikationskanal) Nachrichten ausgetauscht werden, welche beispielsweise geheime Schlüssel (etwa den zumindest einen kryptografischen Schlüssel) enthalten. Fig. 4 zeigt den Austausch von Schlüsseln zwischen der Box 400 (mit dem Mikrocontroller mit Funkeinheit und Datenspeicher 402 sowie der wieder aufladbaren Batterie 404), die etwa der Vorrichtung 10 entsprechen kann, und den Sensorknoten (die dem zumindest einen Mobilgerät entsprechen können), nämlich die Übertragung von individuellen Schlüsseln $S_B$, Sc und $S_D$ 410 vom Mikrocontroller der Box an Sensorknoten B 420, C 430 und D 440.

Es kann beispielsweise an jeden Sensorknoten (an jedes Mobilgerät) ein individueller (kryptografischer) Schlüssel übertragen werden. Dabei ist es in manchen Fällen unerheblich, welcher Sensorknoten welchen Schlüssel erhält. Solange ein Sensorknoten einen beliebigen gültigen Schlüssel kenn, so kann es dem Sensorknoten möglich sein, über einer beliebigen Kanal mit dem Backend zu kommunizieren.

Der Übertragungsvorgang (etwa das Bereitstellen des zumindest einen kryptografischen Schlüssels)kann automatisiert ablaufen, nachdem der Deckel der Box geschlossen wurde (etwa der kabellose Kommunikationskanal ausreichend abgeschirmt ist). Die Box kann einen Mechanismus enthalten, der das Öffnen des Deckels detektiert (und Bestimmt, dass das der kabellose Kommunikationskanal nicht mehr ausreichend abgeschirmt ist) und z.B. die Übertragung des kryptografischen Schlüssels abbricht und den Schlüsselspeicher der Box löscht. Nachdem jeder Sensorknoten mit einem Schlüssel versorgt wurde, können sie aus der Box entfernt und an ihrem Bestimmungsort platziert werden.

Durch die Schirmwirkung der Box kann die Funkkommunikation im Klartext erfolgen, wobei die vorherig beschriebenen Überlegungen gelten. Die Box schützt in manchen Ausführungsbeispielen jedoch zusätzlich gegen einen aktiven Angreifer. Dies wird im Folgenden illustriert.

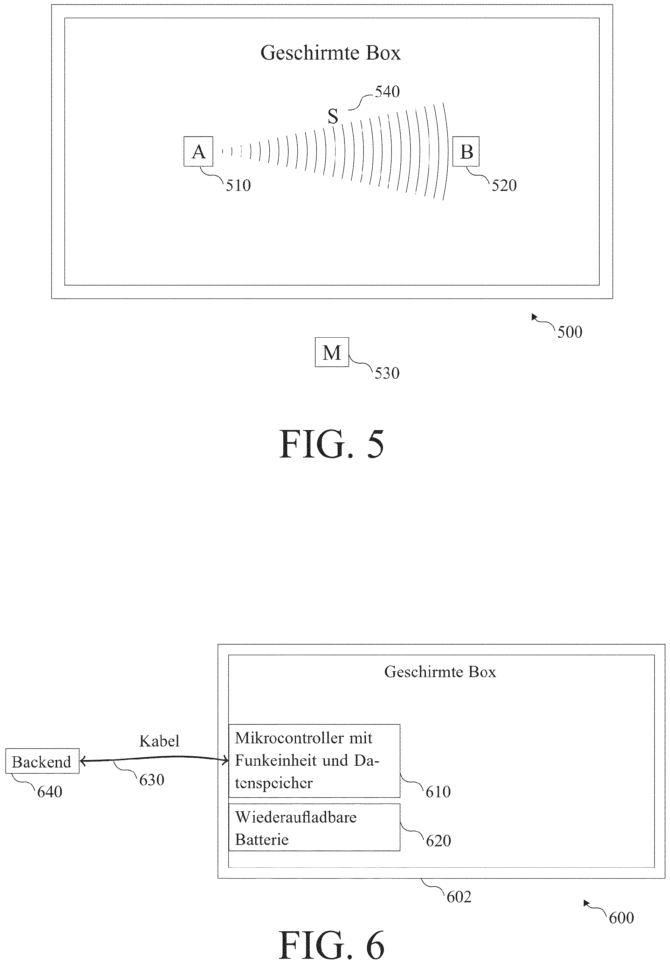

Sei A im Besitz einer geheimen Information S, welche sie an B übermitteln möchte. Sei M ein aktiver Angreifer (nach Dolev-Yao). A und B seien innerhalb der geschirmten Box, M jedoch außerhalb. Nun sendet A die geheime Information S mittels Funk an B. M möchte diese Übertragung außerhalb der Box belauschen. Fig. 5 zeigt die Situation. Fig. 5 zeigt A 510, B 520 und M 530. A überträgt die geheime Information S 540 an B. A und B sind innerhalb der geschirmten Box 500 (etwa innerhalb der Abschirmmittels 14). Der Angreifer M befindet sich außerhalb der Box 500.

Durch die Schirmwirkung der Box beträgt die Signalleistung $P_a$ außerhalb der Box nun

$$P_a = P_{tx,A} - L_F - A_{Box} - A_{Sonstige}$$

wobei $P_{tx,A}$ die Sendeleistung ist, mit der A sendet. $L_F$ sind die Pfadverluste, die mit zunehmender Distanz zwischen Sender und Empfänger zunehmen. $A_{Box}$ beschreibt die Signaldämpfung durch die geschirmte Box. $A_{Sonstige}$ fasst Verluste zusammen, welche z.B. durch falsche Ausrichtung von Sende- oder Empfangsantennen entstehen. Zu $A_{Sonstige}$ tragen ebenfalls Fehlanpassungsverluste von Bauteilen und Zuleitungen bei. Um S mithören zu können, muss M in der Lage sein, Signale mit der geringen Leistung $P_a$ empfangen zu können.

Eine Beispielrechnung soll dies verdeutlichen. Angenommen wird eine geschirmte Box, welche 80 dB Dämpfung aufweist. Die Sendeleistung von A kann mittels Software in einem Bereich zwischen +7 dBm und -21dBm konfiguriert werden. Dabei kann etwa lediglich die Sendeleistung der Box angepasst werden und diese mit geringer Sendeleistung arbeiten. Die Sendeleistung der Sensorknoten muss möglicherweise nicht angepasst werden. Die Übertragung findet etwa bei einer Frequenz von 2.4 GHz statt.

Die Verluste $A_{Sonstige}$ sind schwer abzuschätzen und werden in der Beispielrechnung bewusst vernachlässigt. Bei mangelnder Ausrichtung der Antennen kann $A_{Sonstige}$ jedoch sehr groß werden. Innerhalb von Gebäuden kommen weitere Effekte wie Fading (Schwund) und Mehrwegeausbreitung hinzu, die $A_{Sonstige}$ ebenfalls vergrößern. Der Angreifer M sei in einem Abstand von d = 5m von A entfernt. Bei 2.4 GHz ergibt sich ein Pfadverlust $L_F$ von 54 dB.

$$P_{tx,A} \cong -21dBm$$

$$L_F = +54dB$$

$$A_{Box} = +80dB$$

$$A_{Sonstige} \geq 0dB$$

$$\Rightarrow P_a \leq -155dBm$$

Da M nicht wissen kann, wie die Antenne von A innerhalb der Box ausgerichtet ist, kann M seine eigene Antenne nicht optimal ausrichten, wodurch $A_{Sonstige}$ zunimmt. Je weiter M von der Box entfernt ist, desto geringer ist die Signalstärke, die er erfassen kann. Nähert er sich der Box, so ist zwar der Pfadverlust geringer. Die Wahrscheinlichkeit, entdeckt zu werden, steigt jedoch mit verringerter Distanz. Bei einer Distanz von 5 m oder weniger ist es sehr wahrscheinlich, dass er beispielsweise durch den Bediener der Box 500 entdeckt wird.

Da M als aktiver Angreifer angenommen wird, kann er versuchen, die Übertragung zwischen A und B zu beeinflussen, indem er eine eigene Information aussendet oder den Kanal stört (auch engl. Jamming). In diesem Fall müsste M etwa über eine Sendeleistung verfügen, welche groß genug ist, um die Schirmwirkung der Box zu überwinden. Auch in diesem Falle gelten obenstehende Ausführungen bezüglich Antennenausrichtung und Distanz zwischen M und der Box.

Die Übertragung (des kryptografischen Schlüssels) ist in zumindest einigen Ausführungsbeispielen gegen einen passiven Angreifer geschützt, solange gilt:

$$P_a \leq P_{rx,min,M}$$

Eine Überschlagsrechnung zeigt, welche Signalleistungen $P_{rx,min,M}$ eine Empfangsschaltung beispielsweise noch verarbeiten könnte:

$$P_{rx,min,M} = -100dBm$$

$$G_{Antenne} = +15dB$$

$$G_{Verstärker} = +22.5dB$$

$$P_{a,min} = -137.5dB$$

Im obigen, defensiv gewählten Beispiel, liegt also ein Sicherheitsabstand von 17,5dB vor.

Liegt die Signalstärke eines durch M ausgesandten Signals im Inneren der Box unterhalb der Sensitivität von A und B, so kann der Austausch der geheimen Information S ebenfalls informationstheoretisch sicher gegen einen aktiven Angreifer erfolgen.

$$P_{rx,min,M} \leq^! P_{rx,M} - A_{Box}, -L_F - A_{Sonstige}$$

Die Sicherheit, welche die beschriebene Vorrichtung aufweist, lässt sich rechnerisch abschätzen. Ein Austausch von geheimen Schlüsseln im Klartext innerhalb der Box ist somit möglich, da das Innere der Box einen sicheren Kanal darstellt. Das Sicherheitsniveau lässt sich über die Schirmwirkung der Box skalieren.

In der bisher beschriebenen Ausführung können Geheimnisse zwischen der Box und den Sensorknoten sicher ausgetauscht werden. Ein weiteres Ziel kann es sein, eine sichere Kommunikation zwischen den Sensorknoten und dem Backend durchzuführen. Daher müssen das Backend und die Sensorknoten die entsprechenden Geheimnisse teilen.

Die Box (etwa die Vorrichtung 10) lässt sich dahingehend erweitern, dass sie über einen sicheren Kanal (etwa über den gesicherten Kanal) mit dem Backend kommunizieren kann. Beispielsweise kann ein Kabel verwendet werden, um Schlüssel zwischen der Box und dem Backend zu übertragen. Fig. 6 zeigt die Erweiterung der Box durch ein Kabel. Beispielsweise kann die Vorrichtung 10 eine kabelgebundene Schnittstelle für eine Kommunikation mit einer Zentralstelle (dem Backend) umfassen, und das Kontrollmodul 16 kann ausgebildet sein, um eine Mehrzahl von kryptografischen Schlüsseln über den gesicherten Kanal über die kabelgebundene Schnittstelle zu erhalten. Alternativ kann die Vorrichtung 10 eine kabellose Schnittstelle zur Kommunikation mit der Zentralstelle nutzen und umfassen. Fig. 6 zeigt eine Exemplarische Ausführung der Box 600 mit elektromagnetisch schirmender Umwandung (Abschirmmittel) 602. Die Box umfasst den Mikrocontroller mit Funkeinheit und Datenspeicher (etwa das Kommunikationsmodul 12 und das Kontrollmodul 16) 610 und die wiederaufladbare Batterie 620. Über ein Kabel 630 kann die Box 600 mit dem Backend 640 kommunizieren. Das Kabel stellt dabei einen sicheren Kanal (etwa den gesicherten Kanal) dar.

Das Backend kann eine Anzahl geheimer Schlüssel (etwa die Mehrzahl von kryptografischen Schlüsseln) erzeugen und diese über das Kabel an die Box übertragen. Wie oft dieser Vorgang zu erfolgen hat, kann durch den Anwender bestimmt werden. Um ein hohes Sicherheitsniveau zu erzielen, können häufig wenige Schlüssel erzeugt und übertragen werden. Dies erfordert höheren Aufwand. Dadurch, dass jedoch weniger gültige Schlüssel im Umlauf sind, ist es in manchen Fällen unwahrscheinlicher, dass ein Angreifer Zugriff auf einen Schlüssel bekommt. Das andere Extrem ist, einmalig eine sehr große Anzahl an Schlüssel im Backend zu erzeugen und an die Box (an die Vorrichtung 10) zu übertragen. Dies erfordert minimalen Aufwand, jedoch steigt das Risiko, dass ein Angreifer Zugriff auf einen der nun vielen im Umlauf befindlichen geheimen Schlüssel erhält. Es wurde bereits angemerkt, dass es möglich ist, jedem Sensorknoten einen individuellen Schlüssel zu übertragen. Da das Backend im Besitz aller geheimen Schlüssel ist, ist es meist unerheblich, welchem Sensorknoten welcher Schlüssel zugewiesen wird. Solange ein Sensorknoten einen beliebigen gültigen Schlüssel kennt, kann er über einen sicheren Kanal mit dem Backend kommunizieren.

Die Möglichkeit, individuelle Schlüssel zu verteilen, bietet ein erhöhtes Maß an Sicherheit. Sollte ein Angreifer einen einzelnen Sensorknoten kompromittieren, so kennt der Angreifer nur den individuellen Schlüssel dieses Sensorknotens. Alle anderen Schlüssel können weiter verwendet werden.

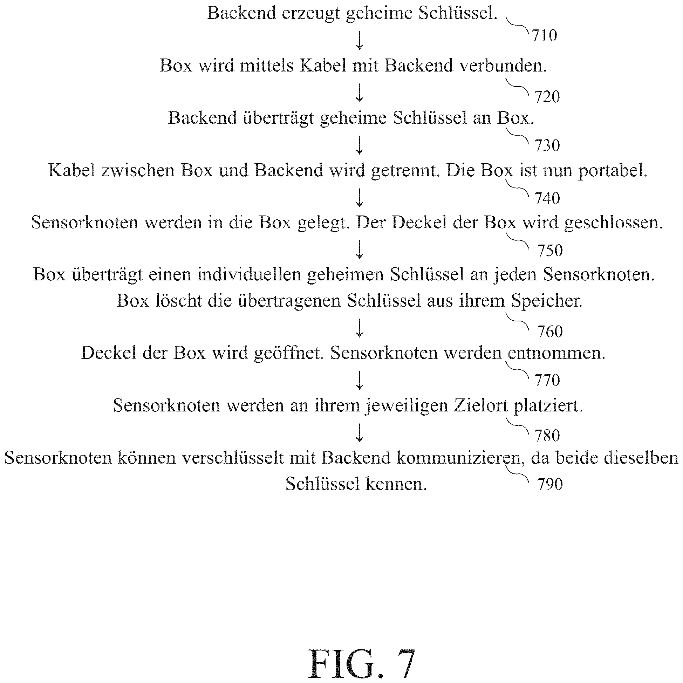

Fig. 7 zeigt einen beispielhaften (vollständigen) Ablauf, wie die Box eingesetzt werden kann. Die Schlüssel werden im Backend erzeugt und durch die Box den Sensorknoten bekannt gemacht. Nun können die Schlüssel verwendet werden, um einen sicheren Kanal zwischen Backend und Sensorknoten herzustellen und somit z.B. Sensordaten geschützt zu übertragen. In Fig. 7 erzeugt das Backend geheime Schlüssel (710). Danach wird die Box mittels Kabel mit dem Backend verbunden (720) und das Backend überträgt die geheimen Schlüssel an die Box (730) (etwa durch Erhalten 110 der Mehrzahl von kryptografischen Schlüsseln). Danach kann das Kabel zwischen der Box und Backend getrennt werden, so dass die Box portabel ist (740). Ein oder mehrere Sensorknoten können nun in die Box gelegt werden und der Deckel der Box geschlossen werden (750). Die Box kann einen individuellen geheimen Schlüssel aus ihrem Speicher übertragen (760) (etwa durch Bereitstellen 140 des zumindest einen kryptografischen Schlüssels). Nach der Übertragung kann der Deckel der Box geöffnet werden und die Sensorknoten entnommen werden (770). Die Sensorknoten können nun an ihrem jeweiligen Zielort platziert werden (780). Die Sensorknoten können verschlüsselt mit dem Backend kommunizieren, da beide dieselben Schlüssel kennen (790).

Ohne die Vorrichtung der Ausführungsbeispiele kann der Anwender manuell für jeden Sensorknoten einen sicheren Kanal erzeugen, um einen geheimen Schlüssel zwischen dem Sensorknoten und dem Backend auszutauschen. Bei Verwendung der Box muss der aufwändige Schritt, nämlich die Verbindung zwischen Backend und Box, hingegen nur einmalig durchgeführt werden. Anschließend kann im Feld automatisiert, schnell und sicher eine große Anzahl von Sensorknoten durch die Box mit Schlüsseln versorgt werden. Die Mobilität der Box ermöglicht es ebenfalls, im Feld eine Aktualisierung der Schlüssel in einem Sensorknoten durchzuführen.

Die Box (die Vorrichtung 10) kann zusätzliche technische Merkmale umfassen. Die Box kann eine USB-Buchse oder einen SD-Kartenleser (Secure Digital, Speicherkartenleser für Speicherkarten nach dem Sicheren Digitalen Speicherkartenstandard) umfassen. Dies ermöglicht, die im Backend erzeugten Schlüssel über einen tragbaren Datenspeicher in die Box zu übertragen. Dabei kann sichergestellt werden, dass die Box nicht direkt mit dem Backend kommunizieren kann. Dies kann das Vertrauen und damit die Akzeptanz der Box im Falle, dass Backend und Box verschiedene Besitzer haben, erhöhen. Die Übertragung mittels Kabel, USB-Stick oder SD-Karte kann als sicher betrachtet werden (etwa als gesicherter Kanal), da ein Angreifer physikalischen Zugang zum Übertragungsmedium bräuchte, um die geheimen Schlüssel auszulesen. Zusätzlich kann der Mikrocontroller in der Box einen geheimen Schlüssel enthalten. Wird dieser einmalig auf einem sicheren Kanal mit dem Backend ausgetauscht, so kann die weitere Kommunikation zwischen Box und Backend mit symmetrischen kryptografischen Verfahren abgesichert werden. Ein Secure Element (Sicheres Element) kann als sicherer Schlüsselspeicher verwendet werden.

Um detektieren zu können, ob die Box geöffnet ist, kann ein sicherer Sensor (etwa das Sensormodul 18) außerhalb der Box angebracht werden. Sobald dieser misst, dass ein Signal aus der Box nach außen dringt, kann eine Aktion ausgelöst werden. Es kann z.B. der Austausch der geheimen Schlüssel unterbrochen und der Schlüsselspeicher der Box gelöscht werden. Sicherer Sensor bedeutet, dass eine Manipulation am Sensor selbst bemerkt werden kann.

Da es sich bei der Box um eine Metallkiste handeln kann, kann auch ein elektromechanischer Kontakt verbaut werden, der detektiert, ob die Box geschlossen ist. Dieser kann mechanisch tief in der Box integriert sein, sodass eine Manipulation zum einen lange dauert und zum anderen einfach detektiert werden kann.

Um sicherzustellen, dass die Box nur von autorisierten Personen bedient wird, kann die Box (etwa das Abschirmmittel 14) verschließbar ausgeführt werden. Hierzu könnte ein mechanisches Schloss mit Schlüssel, aber auch ein elektronisches Schloss verwendet werden. Letzteres könnte durch die Eingabe eines Passworts, Verwendung einer Smartcard oder biometrischer Authentifikationsverfahren entsperrt werden.

Um die Box mittels Passwort entsperren zu können, kann sie mindestens ein Tastenfeld umfassen. Zusätzlich kann sie eine Anzeigeeinheit, z.B. ein Display umfassen. Für die Entsperrung mittels Smartcard oder Biometrie kann eine entsprechende Leseeinheit verbaut werden.

Um sicherzustellen, dass nur autorisierte Personen eine Übertragung von geheimen Schlüsseln an die Sensorknoten starten, kann das/die Authentifikationsmerkmal(e) auch vor dem Beginn der Übertragung gefordert werden.

Das Sicherheitsniveau kann weiter erhöht werden, wenn die Box einen Timer (Zeitmesser/Zeitgeber) enthält (etwa implementiert durch das Kontrollmodul 16), der sie nach einem vorgegebenen Zeitraum ohne Aktion automatisch verschließt. Das Kontrollmodul 16 kann beispielsweise ausgebildet sein, um das abschirmende Behältnis (die Box) nach einem vorgegebenen Zeitraum ohne Aktion (automatisch) zu verschließen. Der Timer ist typischerweise Bestandteil des Mikrocontrollers in der Box. Weiterhin kann die Box so ausgeführt werden, dass sie sich während der Übertragung der geheimen Schlüssel an die Sensorknoten automatisch verschließt und sich nach erfolgreicher Übertragung wieder entsperrt. Das Kontrollmodul 16 kann beispielsweise ausgebildet sein, um das abschirmende Behältnis (die Box) nach während des Bereitstellens der zumindest einen kryptografischen Schlüssels (automatisch) zu verschließen. Die Box kann eine außen montierte Sende- und Empfangseinheit umfassen, welche die Position der Box innerhalb eines Gebäudes ermittelt (z.B. durch Triangulation). Verlässt die Box einen ihr zugewiesenen Bereich, so kann eine Aktion ausgelöst werden (beispielsweise Löschen des Schlüsselspeichers). Das Kontrollmodul 16 kann ausgebildet sein, um die Mehrzahl von Schlüsseln basierend auf einer Veränderung des Standorts der Vorrichtung/des Abschirmmittels zu löschen.

Gegen die meisten Angriffe schützt der mechanische Aufbau der Box. Werden der Mikrocontroller und der Schlüsselspeicher mechanisch tief in die Box integriert, so sind sie einem Angreifer auch bei geöffneter Box schwer zugänglich. Prinzipiell bedingt kann beispielsweise nur die Sendeantenne sowie die physikalischen Schnittstellen, mit denen die Box an das Backend angeschlossen wird (Kabelbuchse, USB-Buchse, SD-Karten Buchse), offen zugänglich sein. Ein robustes Metallgehäuse und ein schlichter Aufbau erschweren Modifikationen und stellen sicher, dass diese leicht detektierbar sind.

In zumindest manchen Ausführungsbeispielen sind die technischen Merkmale der Box (des abschirmenden Behältnisses):

- Eine portable Box, deren Umwandung Schirmwirkung auf elektromagnetische Wellen hat.
- In der Box befindet sich ein Microcontroller mit Funkeinheit und Datenspeicher (etwa das Kontrollmodul 16 und das Kommunikationsmodul 12).
- Die Box baut zu den Sensorknoten eine Funkverbindung (etwa den kabellosen Kommunikationskanal) auf zum Zwecke des Austauschs von Geheimnissen.
- Die Box kann einen sicheren Kanal zum Backend haben, welcher die Portabilität der Box aber nicht beeinträchtigt.
- Die Box kann eine vom Stromnetz unabhängige Spannungsversorgung haben.

Die geschirmte Box (das abschirmende Behältnis) kann die Ausdehnung eines EM Feldes, welches innerhalb der Box erzeugt wird, auf den Innenraum der Box beschränken. Dadurch kann ein informationstheoretisch sicherer Kanal mit geringer Reichweite erzeugt werden. Ein erzielbares Sicherheitsniveau kann über die Schirmwirkung der Box nach den Wünschen des Anwenders skaliert werden.

Der Microcontroller mit Funkeinheit kann ausgebildet sein, um ein Funknetz, dem so viele Sensorknoten beitreten können, wie das Funkprotokoll zulässt, zu erzeugen. Somit können sehr viele Sensorknoten können gleichzeitig mit individuellen Schlüsseln versorgt werden. In manchen Fällen ist zudem keine zusätzliche Hardware an Sensorknoten notwendig, wie es bei anderen Out of Band Übertragungsverfahren der Fall wäre. Zumindest manche Ausführungsbeispiele skalieren gut, da auch bei wachsender Anzahl an Sensorknoten keine zusätzlichen Handgriffe notwendig sind.

Das Abnehmbare Kabel, die USB-Buchse oder der SD-Karten-Leser zur Übertragung von Informationen an die Box (etwa zum Bereitstellen des gesicherten Kanals) können einen sicheren Übertragungsweg für geheime Schlüssel zwischen Backend und Box bereitstellen. Durch eine einfache Handhabung können Benutzerfehler ausgeschlossen oder vermindert werden. Zudem kann eine Spannungsversorgung der Box über das Kabel oder die Buchse geladen werden. Die Abnehmbarkeit ermöglicht einen mobilen Einsatz der Box, nachdem die Schlüssel übertragen wurden.

Die Box kann eine vom Stromnetz unabhängige Spannungsversorgung aufweisen, so dass die Box unabhängig vom Stromnetz operieren kann. Damit kann der Anwender unabhängig von menschlicher Infrastruktur Sensorknoten mit Schlüsseln versorgen oder Schlüssel aktualisieren. Durch den automatisierten Ablauf nach Schließen des Deckels der Box können Schlüssel auf informationstheoretisch sicherem Wege ausgetauscht werden. Der Mensch kann als Fehlerquelle ausgeschlossen werden.

Ausführungsbeispiele schaffen ferner eine Vorrichtung mit dem Kommunikationsmodul 12 und dem Kontrollmodul 14, die für eine Vorrichtung in ein abschirmendes Behältnis vorgesehen ist. Dabei kann etwa der Mikrocontroller mit integriertem Funkmodul in der Box nicht als fester Bestandteil der Box verarbeitet werden. Stattdessen kann dieser als Zusatzmodul verkauft werden. Ein beispielhafter Aufbau sieht dann wie folgt aus: Backend ↔ Kabel ↔ Buchse ↔ Wand der Box ↔ Buchse ↔ Kabel ↔ Microcontroller.

Zumindest manche Ausführungsbeispiele beziehen sich auf die Versorgung einer großen Anzahl an Sensorknoten mit individuellen kryptografischen Schlüsseln. Ausführungsbeispiele können eine sichere Umgebung zur Erneuerung geheimer Schlüssel schaffen.

In manchen Ausführungsbeispielen kann die Vorrichtung (die Box) in der Land- und Forstwirtschaft verwendet werden, etwa für Sensorknoten zur Überwachung von Wäldern, Pflanzen oder von Wetter. Sensornetzwerke werden beispielsweise in der Echtzeitüberwachung von Wäldern durch drahtlos kommunizierende Sensornetze eingesetzt, was eine Risikoabschätzung und frühe Warnung vor Waldbränden, ermöglicht. In der Landwirtschaft leisten Sensornetzwerke etwa eine Echtzeitüberwachung von Pflanzen und Wetter in sehr großen Arealen. Dies ermöglicht eine frühe Erkennung von Erkrankungen der Pflanzen, drohenden Unwetterschäden und Erntezeitpunkten. Zudem können Klimamessungen in Gewächshäusern, in Äckern und im Wald durchgeführt werden, sowie Messungen des Milieus im Pansen einer Kuh zur frühzeitigen Erkennung von Erkrankungen

In allen obengenannten Beispielen werden große Mengen von Sensoren ausgebracht. Die Anwender verlassen sich darauf, dass die erfassten und übertragenen Sensordaten exakt sind. Auf Basis der Sensordaten werden Entscheidungen getroffen, wobei schlechte Entscheidungen hohe Kosten mit sich bringen können.

Die Anwender sind beispielsweise Wissenschaftler, Landwirte und Förster. Bei (allen) Anwendern kann davon ausgegangen werden, dass keine Sicherheits-Kenntnisse vorhanden sind. Ausführungsbeispiele können es diesen Berufsgruppen ermöglichen, auch ohne solche Kenntnisse die Sensorknoten so auszubringen, dass diese Nachrichten verschlüsselt und in ihrer Integrität geschützt übermittelt werden können.

In diesem Anwendungsfall kann die Box (etwa die Vorrichtung 10) dem Wissenschaftler, Landwirt oder Forstwirt gehören. Sie kann in einer Einrichtung gelagert werden, die nur einem Kreis von wenigen vertrauenswürdigen Personen zugänglich ist (private Wohnung, Bauernhof, Forstgebäude, Forschungseinrichtung). In manchen Ausführungsbeispielen ist das Abschirmmittel ein abschirmendes Behältnis (eine abschirmende Box) aus Metall und kann beispielsweise verschlossen werden (mechanisches Schloss oder elektronisches Schloss, welches durch ein Passwort, ein Token oder ein biometrisches Verfahren entsperrt werden kann). Dadurch können Manipulationen im Inneren der Box in diesem Zustand erschwert werden. Werden Zugangswege ins Innere der Box erzwungen (z.B. Bohrungen), so können diese durch eine optische Inspektion der Box sofort bemerkt und als Manipulation des Abschirmmittels erkannt werden, etwa durch das Kontrollmodul 16. Wird die Box hingegen geöffnet gelagert, so können Manipulationen an der in der Box befindlichen Hardware und Firmware (den elektronischen Bauteilen sowie der Programmierung der elektronischen Bauteile) möglicherweise nicht ausgeschlossen werden. Zwar ist es möglich, dass, nachdem geheime Schlüssel verteilt wurden, sich keine Schlüssel mehr im Speicher der Box befinden. Denkbar ist jedoch, dass die Firmware des Mikrocontrollers (etwa das Kontrollmoduls 16) in der Box manipuliert wird, sodass die geheimen Schlüssel nicht mehr aus dem Speicher der Box gelöscht werden, nachdem sie an die Sensorknoten verteilt wurden. Um das Sicherheitsniveau erhöhen, kann die Box (etwa das Kontrollmodul 16) so programmiert (ausgebildet) werden, dass nach Ablauf eines Timers der Speicher der Box gelöscht oder die Box verschlossen wird. Der Anwender kann die geheimen Schlüssel selbst auf seinem Backend erzeugen (etwa auf einem Computersystem). Da Backend und Box derselben Person/Institution gehören, kann die Box mittels Kabel an das Backend angeschlossen werden, um die Schlüssel auf sie zu übertragen.

Beim Transport der Box zum Einsatzort kann sie unter ständiger Aufsicht des Anwenders stehen. Am Einsatzort sind mehrere Szenarien denkbar:

- Der Anwender nutzt die Box einmalig, um alle Sensorknoten mit einem Schlüssel zu versorgen. Anschließend entnimmt er alle Sensorknoten und platziert diese. Dabei lässt er die Box unbeaufsichtigt stehen. Sofern die Box verschlossen abgestellt wurde, ist eine Manipulation auf Grund obiger Ausführungen nur schwer möglich oder kann bemerkt werden.
- Wird die Box verwendet, um jeweils einen einzelnen Sensorknoten mit einem Schlüssel zu versorgen, so wird der Anwender die Box stets mit sich führen. Eine Manipulation der Box kann ausgeschlossen werden.
- Während die Box die Schlüssel an die Sensorknoten überträgt, kann das Kontrollmodul 16 überprüfen, dass die Box geschlossen ist. Somit wird sichergestellt, dass ein Angreifer den Schlüsselaustausch nicht belauschen oder manipulieren kann. Ein mechanischer Schließkontakt, der räumlich tief in der Box platziert ist, kann ermöglichen, dass das Öffnen der Box bemerkt wird. Zusätzlich kann die Box, sofern ein elektronisches Schloss verwendet wird, während des Schlüsselaustausches abgeschlossen werden.

In manchen Ausführungsbeispielen kann die Vorrichtung (die Box) durch den Hersteller von Maschine, welche in der Produktion verwendet werden, genutzt werden. Im Zuge der Digitalisierung, dem Wunsch nach vorausschauender Wartung (auch engl. predictive maintenance) und dem zunehmenden monetären Wert von Daten werden auch bereits bestehende (engl. Legacy)-Maschinen mit Sensoren versehen. Das höchste aller Schutzziele in der industriellen Fertigung ist meist die Verfügbarkeit (engl. Availability). Zeit, in der auf Grund eines Ausfalls einer Maschine nicht gefertigt werden kann, verursacht häufig hohe Kosten. Daher werden Modifikationen an Maschinen, wie sie die Nachrüstung von Sensoren darstellt, häufig nur dann durch den Endkunden der Maschine akzeptiert werden, wenn dadurch die Verfügbarkeit der Maschine nicht eingeschränkt wird. Weiterhin kann in manchen Ausführungsbeispielen vermieden werden, dass die Nachrüstung der Sensoren eine erneute Zertifizierung der Maschinen notwendig macht.

Sensornetzwerke werden also häufig außen an den Maschinen nachgerüstet werden, um dort z.B. Lärm oder Vibrationen zu erfassen. Diese Nachrüstungen können etwa durch einen Techniker des Maschinenherstellers durchgeführt werden. Sie können bei der Herstellung der Maschinen, aber auch bereits an in einer Fabrik aufgestellten Maschinen erfolgen.

In beiden Fällen kann die Box (etwa die Vorrichtung 10) der Firma gehören, welche die Maschinen herstellt. Während sie nicht benutzt wird, kann die Box innerhalb der Firma gelagert werden, d.h. in einem Bereich, der nur einem begrenzten Personenkreis zugänglich ist. Sofern sie dort verschlossen gelagert wird, kann eine Manipulation an der Box kaum möglich und leicht bemerkbar sein. Während des Transportes der Box zu einer Fabrik gelten dieselben Überlegungen wie in Land- und Forstwirtschaft.

Am Einsatzort kann die Übertragung der geheimen Schlüssel vom Backend auf die Box mittels eines tragbaren Speichermediums erfolgen, z.B. einem USB Stick oder einer SD-Karte. Das Speichermedium kann dem Techniker ausgehändigt werden, der es in die Box steckt. Dadurch kann die Fabrik sicherstellen, dass kein Fremdgerät an das Fabriknetzwerk angeschlossen wird. Dies kann die Akzeptanz der Box erhöhen.

Während der Platzierung der Sensorknoten in der Fabrik, sind prinzipiell die beiden oben genannten Szenarien vorstellbar. Sollte die Box unbeaufsichtigt stehen gelassen werden, so kann oder muss sie verschlossen gehalten werden. Anderenfalls könnte Fabrikpersonal Manipulationen an der Box vornehmen. Da in der Fabrik mehr Personen anwesend sind, als in Land- und Forstwirtschaft, kann die Wahrscheinlichkeit einer Manipulation steigen. Durch den mechanischen Aufbau der Box und den Schließmechanismus kann die Manipulation jedoch erschwert werden.

In manchen Ausführungsbeispielen kann die Vorrichtung (die Box) durch einen direkten Angestellten einer Fabrik eingesetzt werden. In diesem Anwendungsfall ist die Box (etwa die Vorrichtung 10) beispielsweise Eigentum der Fabrik und wird innerhalb der Fabrik aufbewahrt. In diesem Szenario könnte sichergestellt werden, dass die Box nicht aus der Fabrik entfernt und anschließend manipuliert wird. Hierzu kann die Box an ihrer Außenseite eine Sende- und Empfangseinheit haben, welche die Position der Box innerhalb der Fabrik ermittelt (z.B. mittels Triangulation zu den in der Fabrik fest montierten WLAN Access Points). Stellt die Box fest, dass sie aus dem ihr zugewiesenen Bereich entfernt wird, so kann eine Aktion ausgelöst werden (z.B. Löschen des Schlüsselspeichers in der Box, Absenden einer Warnung, die Box sperrt sich selbst, ...). Dies kann so implementiert werden, dass der Kunde aus verschiedenen möglichen Aktionen auswählen kann, um Sicherheit gegen Komfort nach seinen Ansprüchen zu balancieren. Beispielsweise kann das Kontrollmodul 16 ausgebildet sein, um die mögliche Manipulation und/oder Deplatzierung der Box zu erkennen und die Aktion auszuführen.

Da das Backend und die Box denselben Besitzer haben, kann die Box in diesem Fall mittels Kabel mit dem Backend verbunden werden, um die geheimen Schlüssel zu übertragen: Box und Backend sind in diesem Fall beide vertrauenswürdig.

Sofern die Box bei Nichtbenutzung abgeschlossen wird, schützt ihr mechanischer Aufbau sie vor physikalischer Manipulation. Um die Übertragung geheimer Schlüssel zwischen der Box und dem Backend abzusichern, kann die Box ein kryptografisches Zertifikat verwenden, welches dem Backend einmalig bekannt gemacht werden muss. Anschließend kann die Übertragung der geheimen Schlüssel zwischen Backend und Box kryptografisch abgesichert erfolgen. Beispielsweise kann die Übertragung über den gesicherten Kanal erfolgen, der durch asymmetrische Kryptografie unter Verwendung des kryptografischen Zertifikates abgesichert ist.

Die Aspekte und Merkmale, die zusammen mit einem oder mehreren der vorher detaillierten Beispiele und Figuren beschrieben sind, können auch mit einem oder mehreren der anderen Beispiele kombiniert werden, um ein gleiches Merkmal des anderen Beispiels zu ersetzen oder um das Merkmal in das andere Beispiel zusätzlich einzuführen.

Beispiele können weiterhin ein Computerprogramm mit einem Programmcode zum Ausführen eines oder mehrerer der obigen Verfahren sein oder sich darauf beziehen, wenn das Computerprogramm auf einem Computer oder Prozessor ausgeführt wird. Schritte, Operationen oder Prozesse von verschiedenen, oben beschriebenen Verfahren können durch programmierte Computer oder Prozessoren ausgeführt werden. Beispiele können auch Programmspeichervorrichtungen, z. B. Digitaldatenspeichermedien, abdecken, die maschinen-, prozessor- oder computerlesbar sind und maschinenausführbare, prozessorausführbare oder computerausführbare Programme von Anweisungen codieren. Die Anweisungen führen einige oder alle der Schritte der oben beschriebenen Verfahren aus oder verursachen deren Ausführung. Die Programmspeichervorrichtungen können z. B. Digitalspeicher, magnetische Speichermedien wie beispielsweise Magnetplatten und Magnetbänder, Festplattenlaufwerke oder optisch lesbare Digitaldatenspeichermedien umfassen oder sein. Weitere Beispiele können auch Computer, Prozessoren oder Steuereinheiten, die zum Ausführen der Schritte der oben beschriebenen Verfahren programmiert sind, oder (feld-)programmierbare Logik-Arrays ((F)PLAs = (Field) Programmable Logic Arrays) oder (feld-)programmierbare Gate-Arrays ((F)PGA = (Field) Programmable Gate Arrays), die zum Ausführen der Schritte der oben beschriebenen Verfahren programmiert sind, abdecken.

Durch die Beschreibung und Zeichnungen werden nur die Grundsätze der Offenbarung dargestellt. Weiterhin sollen alle hier aufgeführten Beispiele grundsätzlich ausdrücklich nur illustrativen Zwecken dienen, um den Leser beim Verständnis der Grundsätze der Offenbarung und der durch den (die) Erfinder beigetragenen Konzepte zur Weiterentwicklung der Technik zu unterstützen. Alle hiesigen Aussagen über Grundsätze, Aspekte und Beispiele der Offenbarung sowie konkrete Beispiele derselben umfassen deren Entsprechungen.

Ein als "Mittel zum..." Ausführen einer bestimmten Funktion bezeichneter Funktionsblock kann sich auf eine Schaltung beziehen, die ausgebildet ist zum Ausführen einer bestimmten Funktion. Somit kann ein "Mittel für etwas" als ein "Mittel ausgebildet für oder geeignet für etwas" implementiert sein, z. B. ein Bauelement oder eine Schaltung ausgebildet für oder geeignet für die jeweilige Aufgabe.

Funktionen verschiedener in den Figuren gezeigter Elemente einschließlich jeder als "Mittel", "Mittel zum Bereitstellen eines Signals", "Mittel zum Erzeugen eines Signals", etc. bezeichneter Funktionsblöcke kann in Form dedizierter Hardware, z. B "eines Signalanbieters", "einer Signalverarbeitungseinheit", "eines Prozessors", "einer Steuerung" etc. sowie als Hardware fähig zum Ausführen von Software in Verbindung mit zugehöriger Software implementiert sein. Bei Bereitstellung durch einen Prozessor können die Funktionen durch einen einzelnen dedizierten Prozessor, durch einen einzelnen gemeinschaftlich verwendeten Prozessor oder durch eine Mehrzahl von individuellen Prozessoren bereitgestellt sein, von denen einige oder von denen alle gemeinschaftlich verwendet werden können. Allerdings ist der Begriff "Prozessor" oder "Steuerung" bei Weitem nicht auf ausschließlich zur Ausführung von Software fähige Hardware begrenzt, sondern kann Digitalsignalprozessor-Hardware (DSP-Hardware; DSP = Digital Signal Processor), Netzprozessor, anwendungsspezifische integrierte Schaltung (ASIC = Application Specific Integrated Circuit), feldprogrammierbare Logikanordnung (FPGA = Field Programmable Gate Array), Nurlesespeicher (ROM = Read Only Memory) zum Speichern von Software, Direktzugriffsspeicher (RAM = Random Access Memory) und nichtflüchtige Speichervorrichtung (storage) umfassen. Sonstige Hardware, herkömmliche und/oder kundenspezifische, kann auch eingeschlossen sein.

Ein Blockdiagramm kann zum Beispiel ein grobes Schaltdiagramm darstellen, das die Grundsätze der Offenbarung implementiert. Auf ähnliche Weise können ein Flussdiagramm, ein Ablaufdiagramm, ein Zustandsübergangsdiagramm, ein Pseudocode und dergleichen verschiedene Prozesse, Operationen oder Schritte repräsentieren, die zum Beispiel im Wesentlichen in computerlesbarem Medium dargestellt und so durch einen Computer oder Prozessor ausgeführt werden, ungeachtet dessen, ob ein solcher Computer oder Prozessor explizit gezeigt ist. In der Beschreibung oder in den Patentansprüchen offenbarte Verfahren können durch ein Bauelement implementiert werden, das ein Mittel zum Ausführen eines jeden der jeweiligen Schritte dieser Verfahren aufweist.

Es versteht sich, dass die Offenbarung mehrerer, in der Beschreibung oder den Ansprüchen offenbarter Schritte, Prozesse, Operationen oder Funktionen nicht als in der bestimmten Reihenfolge befindlich ausgelegt werden soll, sofern dies nicht explizit oder implizit anderweitig, z. B. aus technischen Gründen, angegeben ist. Daher werden diese durch die Offenbarung von mehreren Schritten oder Funktionen nicht auf eine bestimmte Reihenfolge begrenzt, es sei denn, dass diese Schritte oder Funktionen aus technischen Gründen nicht austauschbar sind. Ferner kann bei einigen Beispielen ein einzelner Schritt, Funktion, Prozess oder Operation mehrere Teilschritte, -funktionen, -prozesse oder -operationen einschließen und/oder in dieselben aufgebrochen werden. Solche Teilschritte können eingeschlossen sein und Teil der Offenbarung dieses Einzelschritts sein, sofern sie nicht explizit ausgeschlossen sind.

Weiterhin sind die folgenden Ansprüche hiermit in die detaillierte Beschreibung aufgenommen, wo jeder Anspruch als getrenntes Beispiel für sich stehen kann. Während jeder Anspruch als getrenntes Beispiel für sich stehen kann, ist zu beachten, dass - obwohl ein abhängiger Anspruch sich in den Ansprüchen auf eine bestimmte Kombination mit einem oder mehreren anderen Ansprüchen beziehen kann - andere Beispiele auch eine Kombination des abhängigen Anspruchs mit dem Gegenstand jedes anderen abhängigen oder unabhängigen Anspruchs umfassen können. Solche Kombinationen werden hier explizit vorgeschlagen, sofern nicht angegeben ist, dass eine bestimmte Kombination nicht beabsichtigt ist. Ferner sollen auch Merkmale eines Anspruchs für jeden anderen unabhängigen Anspruch eingeschlossen sein, selbst wenn dieser Anspruch nicht direkt abhängig von dem unabhängigen Anspruch gemacht ist.

## Patentansprüche

1. Verfahren zum Bereitstellen zumindest eines kryptografischen Schlüssels für zumindest ein Mobilgerät (20), das Verfahren umfassend:

   Abschirmen (120) eines kabellosen Kommunikationskanals zwischen einem Kommunikationsmodul (12) und dem zumindest einem Mobilgerät (20) durch ein Abschirmmittel (14) um den kabellosen Kommunikationskanal zu schützen;
   Bestimmen (130), ob der kabellose Kommunikationskanal durch das Abschirmmittel (14) abgeschirmt ist, wobei das Bestimmen (130), ob der kabellose Kommunikationskanal durch das Abschirmmittel (14) ausreichend abgeschirmt ist, ein Messen einer Signalstärke einer kabellosen Kommunikation über den kabellosen Kommunikationskanal nach dem Abschirmen durch das Abschirmmittel (14) umfasst; und
   Bereitstellen (140) des zumindest einen kryptografischen Schlüssels für das zumindest eine Mobilgerät (20) über den abgeschirmten kabellosen Kommunikationskanal, wobei das Bereitstellen (140) des zumindest einen kryptografischen Schlüssels durchgeführt wird, falls das Bestimmen (130), ob der kabellose Kommunikationskanal durch das Abschirmmittel (14) abgeschirmt ist, feststellt, dass der kabellose Kommunikationskanal durch das Abschirmmittel (14) ausreichend abgeschirmt ist.

2. Das Verfahren gemäß Anspruch 1, wobei das Abschirmmittel (14) ein abschirmendes Behältnis ist.

3. Das Verfahren gemäß einem der vorherigen Ansprüche, wobei das Abschirmen (120) den kabellosen Kommunikationskanal gegenüber einem weiteren kabellosen Empfänger, der von dem Kommunikationsmodul (12) und dem zumindest einen Mobilgerät (20) verschieden ist, abschirmt, und/oder wobei das Abschirmen (120) dazu ausgelegt ist, ein Abhören des kabellosen Kommunikationskanals durch einen weiteren kabellosen Empfänger, der von dem Kommunikationsmodul (12) und dem zumindest einen Mobilgerät (20) verschieden ist, zu erschweren.

4. Das Verfahren gemäß einem der vorherigen Ansprüche, wobei das Abschirmmittel eine kabellose Kommunikation zwischen der Kommunikationsmodul (12) und dem zumindest einem Mobilgerät (20) über den abgeschirmten kabellosen Kommunikationskanal so abschirmt, dass Daten, welche über den abgeschirmten Kommunikationskanal übertragen werden, durch einen weiteren, von dem Kommunikationsmodul (12) und dem zumindest einen Mobilgerät (20) verschiedenen kabellosen Empfänger nicht vollständig rekonstruiert werden können.

5. Das Verfahren gemäß einem der Ansprüche 1 bis 4, wobei das Bereitstellen (140) des zumindest einen kryptografischen Schlüssels unterbrochen wird, falls das Bestimmen (130), ob der kabellose Kommunikationskanal durch das Abschirmmittel (14) ausreichend abgeschirmt ist, feststellt, dass der kabellose Kommunikationskanal nicht mehr ausreichend durch das Abschirmmittel (14) abgeschirmt ist.

6. Das Verfahren gemäß einem der Ansprüche 1 bis 5, wobei das Abschirmmittel (14) ein abschirmendes Behältnis ist, und wobei das Bestimmen (130), ob der kabellose Kommunikationskanal durch das Abschirmmittel (14) ausreichend abgeschirmt ist, darauf basiert, ob das abschirmende Behältnis geschlossen ist.

7. Das Verfahren gemäß einem der vorherigen Ansprüche, wobei der kryptografische Schlüssel ein kryptografischer Schlüssel zur Authentifizierung des zumindest einen Mobilgeräts (20) gegenüber einem Kommunikationspartner ist,

und/oder wobei der kryptografische Schlüssel nach der Bereitstellung (140) des zumindest einen kryptografischen Schlüssels von dem zumindest einen Mobilgerät (20) genutzt wird, um das zumindest eine Mobilgerät (20) über den kabellosen Kommunikationskanal gegenüber einem Kommunikationspartner zu Authentifizieren, und/oder wobei der kryptografische Schlüssel zum kryptografischen Absichern einer kabellosen Kommunikation des zumindest einen Mobilgeräts (20) vorgesehen ist.

8. Das Verfahren gemäß einem der vorherigen Ansprüche, wobei der kabellose Kommunikationskanal auf einem kabellosen Kommunikationsstandard basiert,

und wobei der kabellose Kommunikationsstandard der einzige kabellose Kommunikationsstandard ist, der von dem zumindest einen Mobilgerät (20) unterstützt wird, und/oder wobei der kabellose Kommunikationsstandard nach der Bereitstellung (140) des zumindest einen kryptografischen Schlüssels von dem zumindest einen Mobilgerät (20) genutzt wird, um Nutzdaten des Mobilgeräts (20) zu einem Kommunikationspartner zu übertragen.

9. Das Verfahren gemäß einem der vorherigen Ansprüche, ferner umfassend Erhalten (110) einer Mehrzahl von kryptografischen Schlüsseln über einen gesicherten Kanal, wobei das Bereitstellen (140) des zumindest einen kryptografischen Schlüssels auf der Mehrzahl von kryptografischen Schlüsseln basiert.

10. Das Verfahren gemäß Anspruch 9, ferner umfassend Erkennen (112) einer möglichen Manipulation des Abschirmmittels (14) und Löschen (114) der Mehrzahl von kryptografischen Schlüsseln, falls eine mögliche Manipulation des Abschirmmittels (14) erkannt wird.

11. Vorrichtung (10) zum Bereitstellen zumindest eines kryptografischen Schlüssels für zumindest ein Mobilgerät (20), die Vorrichtung umfassend:

ein Kommunikationsmodul (12) ausgebildet zum Kommunizieren mit dem zumindest einen Mobilgerät (20) über einen kabellosen Kommunikationskanal; ein Abschirmmittel (14) ausgebildet zum Abschirmen des kabellosen Kommunikationskanals zwischen dem Kommunikationsmodul (12)

und dem zumindest einen Mobilgerät (20) um den kabellosen Kommunikationskanal zu schützen; und

ein Sensormodul (18) ausgebildet zum Bestimmen, ob der kabellose Kommunikationskanal ausreichend durch das Abschirmmittel (14) abgeschirmt ist, wobei das Bestimmen, ob der kabellose Kommunikationskanal durch das Abschirmmittel (14) ausreichend abgeschirmt ist, ein Messen einer Signalstärke einer kabellosen Kommunikation über den kabellosen Kommunikationskanal nach dem Abschirmen durch das Abschirmmittel (14) umfasst; und

ein Kontrollmodul (16) ausgebildet zum Bereitstellen des zumindest einen kryptografischen Schlüssels über das Kommunikationsmodul (12) und den abgeschirmten kabellosen Kommunikationskanal für das zumindest eine Mobilgerät (20), wobei das Kontrollmodul (16) ausgebildet ist, den zumindest einen kryptografischen Schlüssels bereitzustellen, falls das Sensormodul (18) bestimmt, dass der kabellose Kommunikationskanal ausreichend durch das Abschirmmittel (14) abgeschirmt ist.

12. Die Vorrichtung (10) gemäß Anspruch 11, wobei das Abschirmmittel (14) ein abschirmendes Behältnis ist, wobei das abschirmende Behältnis zur Aufnahme des zumindest einen Mobilgeräts während des Bereitstellens des zumindest einen kryptografischen Schlüssels ausgelegt ist, und wobei das Kommunikationsmodul (12) innerhalb des abschirmenden Behältnisses angeordnet ist.

**Claims**

1. A method for providing at least one cryptographic key for at least one mobile device (20), the method comprising:

shielding (120) a wireless communication channel between a communication module (12) and the at least one mobile device (20) by a shielding means (14) to protect the wireless communication channel;

determining (130) whether the wireless communication channel is shielded by the shielding means (14), wherein determining (130) whether the wireless communication channel is sufficiently shielded by the shielding means (14) comprises measuring a signal strength of a wireless communication via the wireless communication channel after shielding by the shielding means (14); and

providing (140) the at least one cryptographic key for the at least one mobile device (20) via the shielded wireless communication channel, wherein providing (140) the at least one cryptographic key is performed if determining (130) whether the wireless communication channel is shielded by the shielding means (14) determines that the wireless communication channel is sufficiently shielded by the shielding means (14).

2. The method of claim 1, wherein the shielding means (14) is a shielding container.

3. The method of any one of the preceding claims, wherein shielding (120) shields the wireless communication channel from a further wireless receiver that is different from the communication module (12) and the at least one mobile device (20), and/or wherein shielding (120) is configured to impede interception of the wireless communication channel by a further wireless receiver that is different from the communication module (12) and the at least one mobile device (20).

4. The method of any one of the preceding claims, wherein the shielding means shields a wireless communication between the communication module (12) and the at least one mobile device (20) via the shielded wireless communication channel such that data transmitted via the shielded communication channel may not be fully reconstructed by a further wireless receiver that is different from the communication module (12) and the at least one mobile device (20).

5. The method of any one of claims 1 to 4, wherein providing (140) the at least one cryptographic key is interrupted if determining (130) whether the wireless communication channel is sufficiently shielded by the shielding means (14) determines that the wireless communication channel is no longer sufficiently shielded by the shielding means (14).

6. The method of any one of claims 1 to 5, wherein the shielding means (14) is a shielding container, and wherein determining (130) whether the wireless communication channel is sufficiently shielded by the shielding means (14) is based on whether the shielding container is closed.

7. The method of any one of the preceding claims, wherein the cryptographic key is a cryptographic key for authenticating the at least one mobile device (20) to a communication partner,

and/or wherein the cryptographic key is used by the at least one mobile device (20) after providing (140) the at least one cryptographic key to authenticate the at least one mobile device (20) to a communication partner via the wireless communication channel,

and/or wherein the cryptographic key is intended for cryptographically securing a wireless communication of the at least one mobile device (20).

8. The method of any one of the preceding claims, wherein the wireless communication channel is based on a wireless communication standard,

and wherein the wireless communication standard is the only wireless communication standard supported by the at least one mobile device (20), and/or wherein the wireless communication standard is used by the at least one mobile device (20) after providing (140) the at least one cryptographic key to transmit payload data of the mobile device (20) to a communication partner.

9. The method of any one of the preceding claims, further comprising obtaining (110) a plurality of cryptographic keys via a secured channel, wherein providing (140) the at least one cryptographic key is based on the plurality of cryptographic keys.

10. The method of claim 9, further comprising detecting (112) a possible manipulation of the shielding means (14) and deleting (114) the plurality of cryptographic keys if a possible manipulation of the shielding means (14) is detected.

11. An apparatus (10) for providing at least one cryptographic key for at least one mobile device (20), the apparatus comprising:

a communication module (12) configured to communicate with the at least one mobile device (20) via a wireless communication channel; a shielding means (14) configured to shield the wireless communication channel between the communication module (12) and the at least one mobile device (20) to protect the wireless communication channel; and a sensor module (18) configured to determine whether the wireless communication channel is sufficiently shielded by the shielding means (14), wherein determining whether the wireless communication channel is sufficiently shielded by the shielding means (14) comprises measuring a signal strength of a wireless communication via the wireless communication channel after shielded by the shielding means (14); and a control module (16) configured to provide the at least one cryptographic key via the communication module (12) and the shielded wireless communication channel for the at least one mobile device (20), wherein the control module (16) is configured to provide the at least one cryptographic key if the sensor module (18) determines that the wireless communication channel is sufficiently shielded by the shielding means (14).

12. The apparatus (10) of claim 11, wherein the shielding means (14) is a shielding container, wherein the shielding container is configured to receive the at least one mobile device during provision of the at least one cryptographic key, and wherein the communication module (12) is disposed within the shielding container.

**Revendications**

1. Procédé pour fournir au moins une clé cryptographique pour au moins un dispositif mobile (20), le procédé comprenant :

blinder (120) un canal de communication sans fil entre un module de communication (12) et l'au moins un dispositif mobile (20) par un moyen de blindage (14) pour protéger le canal de communication sans fil ; déterminer (130) si le canal de communication sans fil est blindé par le moyen de blindage (14), la détermination (130) si le canal de communication sans fil est suffisamment blindé par le moyen de blindage (14) comprend la mesure d'une intensité de signal d'une communication sans fil via le canal de communication sans fil après le blindage par le moyen de blindage (14) ; et fournir (140) l'au moins une clé cryptographique pour l'au moins un dispositif mobile (20) via le canal de communication sans fil blindé, la fourniture (140) de l'au moins une clé cryptographique étant effectuée si la détermination (130) si le canal de communication sans fil est blindé par le moyen de blindage (14) détermine que le canal de communication sans fil est suffisamment blindé par le moyen de blindage (14).

2. Procédé selon la revendication 1, le moyen de blindage (14) étant un récipient de blindage.

3. Procédé selon l'une des revendications précédentes, le blindage (120) blindant le canal de communication sans fil contre un autre récepteur sans fil différent du module de communication (12) et de l'au moins un dispositif mobile (20), et/ou le blindage (120) étant configuré pour rendre difficile une interception du canal de communication sans fil par un autre récepteur sans fil différent du module de communication (12) et de l'au moins un dispositif mobile (20).

**4.** Procédé selon l'une des revendications précédentes, le moyen de blindage blindant une communication sans fil entre le module de communication (12) et l'au moins un dispositif mobile (20) via le canal de communication sans fil blindé de telle sorte que des données transmises via le canal de communication blindé ne peuvent pas être entièrement reconstruites par un autre récepteur sans fil différent du module de communication (12) et de l'au moins un dispositif mobile (20).

**5.** Procédé selon l'une des revendications 1 à 4, la fourniture (140) de l'au moins une clé cryptographique étant interrompue si la détermination (130) si le canal de communication sans fil est suffisamment blindé par le moyen de blindage (14) détermine que le canal de communication sans fil n'est plus suffisamment blindé par le moyen de blindage (14).

**6.** Procédé selon l'une des revendications 1 à 5, le moyen de blindage (14) étant un récipient de blindage, et la détermination (130) si le canal de communication sans fil est suffisamment blindé par le moyen de blindage (14) étant basée sur le fait si le récipient de blindage est fermé.

**7.** Procédé selon l'une des revendications précédentes, la clé cryptographique étant une clé cryptographique pour authentifier l'au moins un dispositif mobile (20) vis-à-vis d'un partenaire de communication,

et/ou dans lequel, après la fourniture (140) de l'au moins une clé cryptographique, la clé cryptographique est utilisée par l'au moins un dispositif mobile (20) pour authentifier l'au moins un dispositif mobile (20) vis-à-vis d'un partenaire de communication via le canal de communication sans fil,
et/ou la clé cryptographique étant prévue pour la sécurisation cryptographique d'une communication sans fil de l'au moins un dispositif mobile (20).

**8.** Procédé selon l'une des revendications précédentes, le canal de communication sans fil étant basé sur un standard de communication sans fil,

et le standard de communication sans fil étant le seul standard de communication sans fil supporté par l'au moins un dispositif mobile (20),
et/ou dans lequel, après la fourniture (140) de l'au moins une clé cryptographique, le standard de communication sans fil est utilisé par l'au moins un dispositif mobile (20) pour transmettre des données utiles du dispositif mobile (20) à un partenaire de communication.

**9.** Procédé selon l'une des revendications précédentes, comprenant en outre l'obtention (110) d'une pluralité de clés cryptographiques via un canal sécurisé, la fourniture (140) de l'au moins une clé cryptographique étant basée sur la pluralité de clés cryptographiques.

**10.** Procédé selon la revendication 9, comprenant en outre la détection (112) d'une éventuelle manipulation du moyen de blindage (14) et l'effacement (114) de la pluralité de clés cryptographiques si une éventuelle manipulation du moyen de blindage (14) est détectée.

**11.** Dispositif (10) pour fournir au moins une clé cryptographique pour au moins un dispositif mobile (20), le dispositif comprenant :

un module de communication (12) configuré pour communiquer avec l'au moins un dispositif mobile (20) via un canal de communication sans fil ;
un moyen de blindage (14) configuré pour blinder le canal de communication sans fil entre le module de communication (12) et l'au moins un dispositif mobile (20) afin de protéger le canal de communication sans fil ; et
un module de capteur (18) configuré pour déterminer si le canal de communication sans fil est suffisamment blindé par le moyen de blindage (14), la détermination si le canal de communication sans fil est suffisamment blindé par le moyen de blindage (14) comprend la mesure d'une intensité de signal d'une communication sans fil via le canal de communication sans fil après le blindage par le moyen de blindage (14) ; et
un module de contrôle (16) configuré pour fournir l'au moins une clé cryptographique via le module de communication (12) et le canal de communication sans fil blindé pour l'au moins un dispositif mobile (20), le module de contrôle (16) étant configuré pour fournir l'au moins une clé cryptographique si le module de capteur (18) détermine que le canal de communication sans fil est suffisamment blindé par le moyen de blindage (14).

**12.** Dispositif (10) selon la revendication 11, le moyen de blindage (14) étant un récipient de blindage, le récipient de blindage étant configuré pour recevoir l'au moins un dispositif mobile pendant la fourniture de l'au moins une clé cryptographique, et le module de communication (12) étant disposé dans le récipient de blindage.

```
┌─────────────────────────────────────────┐
│       ABSCHIRMEN EINES KABEL-            │
│   LOSEN KOMMUNIKATIONSKANALS             │ ⟍120
└─────────────────────────────────────────┘
                    │
┌─────────────────────────────────────────┐
│    BEREITSTELLEN DES ZUMINDEST           │
│  EINEN KRYPTOGRAFISCHEN SCHLÜSSELS       │ ⟍140
└─────────────────────────────────────────┘
```

# FIG. 1a

```
┌ ─ ─ ─ ─ ─ ─ ─ ─ ─ ─ ─ ─ ─ ─ ─ ┐
│       ERHALTEN EINER MEHRZAHL           │
│   KRYPTOGRAFISCHER SCHLÜSSEL            │ ⟍110
└ ─ ─ ─ ─ ─ ─ ─ ─ ─ ─ ─ ─ ─ ─ ─ ┘
                    │
┌ ─ ─ ─ ─ ─ ─ ─ ─ ─ ─ ─ ─ ─ ─ ─ ┐
│       ERKENNEN EINER MÖGLICHEN          │
│  MANIPULATION DES ABSCHIRMMITTELS       │ ⟍112
└ ─ ─ ─ ─ ─ ─ ─ ─ ─ ─ ─ ─ ─ ─ ─ ┘
                    │
┌ ─ ─ ─ ─ ─ ─ ─ ─ ─ ─ ─ ─ ─ ─ ─ ┐
│         LÖSCHEN DER MEHRZAHL            │
│   KRYPTOGRAFISCHER SCHLÜSSEL           │ ⟍114
└ ─ ─ ─ ─ ─ ─ ─ ─ ─ ─ ─ ─ ─ ─ ─ ┘
                    │
┌─────────────────────────────────────────┐
│       ABSCHIRMEN EINES KABEL-            │
│   LOSEN KOMMUNIKATIONSKANALS             │ ⟍120
└─────────────────────────────────────────┘
                    │
┌ ─ ─ ─ ─ ─ ─ ─ ─ ─ ─ ─ ─ ─ ─ ─ ┐
│       BESTIMMEN, OB DER KABEL-          │
│     LOSE KOMMUNIKATIONSKANAL            │
│         ABGESCHIRMT IST                 │ ⟍130
└ ─ ─ ─ ─ ─ ─ ─ ─ ─ ─ ─ ─ ─ ─ ─ ┘
                    │
┌─────────────────────────────────────────┐
│    BEREITSTELLEN DES ZUMINDEST           │
│  EINEN KRYPTOGRAFISCHEN SCHLÜSSELS       │ ⟍140
└─────────────────────────────────────────┘
```

# FIG. 1b

FIG. 2a

FIG. 2b

# FIG. 3

# FIG. 4

Geschirmte Box

540

S

A
510

B
520

500

M
530

# FIG. 5

Geschirmte Box

Kabel

Backend
640

630

Mikrocontroller mit
Funkeinheit und Da-
tenspeicher
610

Wiederaufladbare
Batterie
620

602

600

# FIG. 6

Backend erzeugt geheime Schlüssel.
↓   710
Box wird mittels Kabel mit Backend verbunden.
↓   720
Backend überträgt geheime Schlüssel an Box.
↓   730
Kabel zwischen Box und Backend wird getrennt. Die Box ist nun portabel.
↓   740
Sensorknoten werden in die Box gelegt. Der Deckel der Box wird geschlossen.
↓   750
Box überträgt einen individuellen geheimen Schlüssel an jeden Sensorknoten.
Box löscht die übertragenen Schlüssel aus ihrem Speicher.
↓   760
Deckel der Box wird geöffnet. Sensorknoten werden entnommen.
↓   770
Sensorknoten werden an ihrem jeweiligen Zielort platziert.
↓   780
Sensorknoten können verschlüsselt mit Backend kommunizieren, da beide dieselben
Schlüssel kennen.  790

# FIG. 7

**EP 3 557 897 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080298587 A1
- WO 2010013121 A1
- WO 2009113057 A1